# EUROPEAN PATENT APPLICATION

(11) **EP 4 607 742 A1**
(43) Date of publication of application: **27.08.2025**
(21) Application number: 22963097.5
(22) Date of filing: 27.10.2022
(51) Int. Cl.: H02J 7/00

(54) **CIRCUIT, CONTROL METHOD AND CONTROL APPARATUS FOR CIRCUIT, AND VEHICLE**

(71) Applicant: Shenzhen Yinwang Intelligent Technologies Co., Ltd., Shenzhen, Guangdong 518129 (CN)
(72) Inventor: SHEN, Tianyue, Shenzhen, Guangdong 518129 (CN); WANG, Deyuan, Shenzhen, Guangdong 518129 (CN)
(74) Representative: Gill Jennings & Every LLP
(86) International application number: PCT/CN2022/128040
(87) International publication number: WO 2024/087113

(57) **Abstract**

Embodiments of this application provide a circuit, a control method and apparatus for the circuit, and a vehicle, which may be applied to fields such as vehicles, terminal products, and home products. The circuit includes a first battery group, a second battery group, a first switch, a second switch, a third switch, a fourth switch, and a first branch. The first branch includes a first resistor and a fifth switch that are connected in series, where a positive electrode of the first battery group is electrically connected to a positive electrode of the second battery group through the first switch and the second switch, a negative electrode of the first battery group is electrically connected to a negative electrode of the second battery group through the third switch and the fourth switch, and the first branch is connected in parallel to the first switch, the second switch, the third switch, or the fourth switch. In embodiments of this application, a voltage of the first battery group and a voltage of the second battery group are equalized through the first branch, so that performance of the circuit can be significantly improved.

## Description

### TECHNICAL FIELD

Embodiments of this application relate to the field of electronic and electrical technologies, and more specifically, to a circuit, a control method and apparatus for the circuit, and a vehicle.

### BACKGROUND

For a battery circuit that can switch a serial/parallel connection manner, a potential of a battery charging/discharging interface may be changed by changing the serial/parallel connection manner of the battery circuit, to be compatible with a high-voltage/low-voltage power supply apparatus or a high-voltage/low-voltage power-consuming apparatus. Currently, the battery circuit that can switch a serial/parallel connection manner has been widely used in fields such as vehicles, terminal products, and home products.

Specifically, when the battery circuit is switched to the series connection manner, the high-voltage power supply apparatus may charge a battery, or a battery may discharge to the high-voltage power-consuming apparatus. When the battery circuit is switched to the parallel connection manner, the low-voltage power-consuming apparatus may charge a battery, or a battery may discharge to the low-voltage power-consuming apparatus. However, the battery circuit that can switch a serial/parallel connection manner has a problem that a circulating current and the like affect use performance of the battery circuit.

### SUMMARY

Embodiments of this application provide a circuit, a control method and apparatus for the circuit, and a vehicle, to significantly improve performance of the circuit.

According to a first aspect, a circuit is provided. The circuit includes a first battery group, a second battery group, a first switch, a second switch, a third switch, a fourth switch, and a first branch. The first branch includes a first resistor and a fifth switch that are connected in series, where a positive electrode of the first battery group is electrically connected to a positive electrode of the second battery group through the first switch and the second switch, a negative electrode of the first battery group is electrically connected to a negative electrode of the second battery group through the third switch and the fourth switch, and the first branch is connected in parallel to the first switch, the second switch, the third switch, or the fourth switch.

Based on the foregoing circuit, if the first switch, the second switch, the third switch, and the fourth switch are turned on, the first battery group and the second battery group may be in a parallel-connection state. However, if there is a difference between a voltage of the first battery group and a voltage of the second battery group, a circulating current problem occurs when the first battery group and the second battery group are connected in parallel, and safety and performance of the circuit are affected.

The circuit provided in this embodiment of this application further includes a first branch. The first branch is connected in parallel to the first switch, the second switch, the third switch, or the fourth switch. The first branch can equalize the voltages between the two battery groups, so that the circulating current problem of the battery groups in the parallel-connection state can be resolved, and performance of the circuit is significantly improved.

With reference to the first aspect, in some implementations of the first aspect, the circuit is configured to: when a voltage of the first battery group is not equal to a voltage of the second battery group, turn on the fifth switch, turn on a switch that is in the first switch, the second switch, the third switch, and the fourth switch and that is not connected in parallel to the first branch, and turn off a switch that is in the first switch, the second switch, the third switch, and the fourth switch and that is connected in parallel to the first branch (in other words, the circuit is configured to equalize the voltage of the first battery group and the voltage of the second battery group).

In this embodiment of this application, when the voltage of the first battery group is not equal to the voltage of the second battery group, the fifth switch and the switch that is in the first switch, the second switch, the third switch, and the fourth switch and that is not connected in parallel to the first branch are turned on, and the switch that is in the first switch, the second switch, the third switch, and the fourth switch and that is connected in parallel to the first branch is turned off, so that an equalized current of the voltage of the first battery group V1 and the voltage of the second battery group V2 can be controlled within a safe range. This can resolve the circulating current problem of the circuit in a case in which the battery groups are connected in parallel, and can significantly improve performance of the circuit.

With reference to the first aspect, in some implementations of the first aspect, the circuit is configured to: when a difference between a voltage of the first battery group and a voltage of the second battery group is greater than a first threshold, turn on the fifth switch, turn on a switch that is in the first switch, the second switch, the third switch, and the fourth switch and that is not connected in parallel to the first branch, and turn off a switch that is in the first switch, the second switch, the third switch, and the fourth switch and that is connected in parallel to the first branch (in other words, the circuit is configured to equalize the voltage of the first battery group and the voltage of the second battery group).

The first threshold may be a value like 5 V, 10 V, or 20 V. A specific value may be determined with reference to an actual situation. This is not limited in this application.

In this embodiment of this application, when the difference between the voltage of the first battery group and the voltage of the second battery group is greater than the first threshold, the voltage of the first battery group and the voltage of the second battery group may be equalized through the first branch, to avoid frequent equalization and reduce waiting time in a use process of a user.

With reference to the first aspect, in some implementations of the first aspect, the circuit further includes a first interface and a sixth switch, the negative electrode of the first battery group is electrically connected to the positive electrode of the second battery group through the sixth switch, a first end of the first interface is connected between the first switch and the second switch, a second end of the first interface is connected between the third switch and the fourth switch, the first interface is configured to connect to a first apparatus, and the first apparatus includes a first power supply apparatus or a first power-consuming apparatus.

Based on the circuit, the first battery group and the second battery group may be configured to be in a series-connection working mode, a parallel-connection working mode or an independent working mode through turning on or turning off of the switches. The circuit may be compatible with first apparatuses with different voltage ranges in different working modes, so that wide application of the circuit can be improved.

With reference to the first aspect, in some implementations of the first aspect, the first apparatus includes the first power supply apparatus, and the first power supply apparatus is configured to charge the first battery group and/or the second battery group; and the circuit is configured to: turn on the first switch, the second switch, the third switch, and the fourth switch and turn off the fifth switch and the sixth switch when a sum of the voltage of the first battery group and the voltage of the second battery group is less than twice a maximum output voltage of the first power supply apparatus (in other words, the circuit is configured to charge the first battery group and the second battery group in parallel).

Optionally, the circuit may be further configured to: turn on the first switch, the fourth switch, and the sixth switch and turn off the second switch, the third switch, and the fifth switch when the sum of the voltage of the first battery group and the voltage of the second battery group is less than the maximum output voltage of the first power supply apparatus (in other words, the circuit is configured to charge the first battery group and the second battery group in series).

The circuit provided in this embodiment of this application may be configured to charge the first battery group and the second battery group in series when the sum of the voltage of the first battery group and the voltage of the second battery group is less than the maximum output voltage of the first power supply apparatus. Compared with those in a parallel charging mode, a current in a series circuit is smaller, and a circuit loss is also smaller in a serial charging mode.

Optionally, the turning on the first switch, the second switch, the third switch, and the fourth switch, and turning off the fifth switch and the sixth switch when a sum of the voltage of the first battery group and the voltage of the second battery group is less than twice the maximum output voltage of the first power supply apparatus further includes: when the difference between the voltage of the first battery group and the voltage of the second battery group is greater than a second threshold, turning on the fifth switch, turning on the switch that is in the first switch, the second switch, the third switch, and the fourth switch and that is not connected in parallel to the first branch, and turning off the sixth switch and the switch that is in the first switch, the second switch, the third switch, and the fourth switch and that is connected in parallel to the first branch (in other words, the circuit is configured to equalize the voltage of the first battery group and the voltage of the second battery group); and/or when the difference between the voltage of the first battery group and the voltage of the second battery group is less than or equal to the second threshold, turning on the first switch, the second switch, the third switch, and the fourth switch, and turning off the fifth switch and the sixth switch (in other words, the circuit is configured to charge the first battery group and the second battery group in parallel).

The second threshold may also be a value like 5 V, 10 V, or 20 V. A specific value may be determined with reference to an actual situation. This is not limited in this application.

In this embodiment of this application, the circuit may be flexibly configured to be in a working mode like serial charging, parallel charging, or voltage equalization based on a relationship between the maximum output voltage of the first power supply apparatus and both the voltage of the first battery group and the voltage of the second battery group. In this way, the battery can be more widely compatible with more power supply apparatuses with different supply voltage ranges, thereby improving charging experience of the user.

Optionally, the circuit may alternatively be configured to separately charge the first battery group and the second battery group via the first power supply apparatus. Specifically, the circuit may be configured to: turn on the first switch and the third switch and turn off the second switch and the fourth switch when the voltage of the first battery group is less than the voltage of the second battery group; and/or the circuit is configured to: turn on the second switch and the fourth switch and turn off the first switch and the third switch when the voltage of the first battery group is greater than the voltage of the second battery group.

Optionally, in this embodiment of this application, the voltage of the first battery group and the voltage of the second battery group may be equalized by independently charging the first battery group and the second battery group. For example, when the voltage of the first battery group is less than the voltage of the second battery group, the first switch and the third switch may be turned on, and the second switch and the fourth switch may be turned off, to independently charge the first battery group. Independent charging of the first battery group is stopped until the voltage of the first battery group is equal to the voltage of the second battery group (or the difference between the voltage of the first battery group and the voltage of the second battery group is less than or equal to the second threshold). For another example, when the voltage of the first battery group is greater than the voltage of the second battery group, the second switch and the fourth switch are turned on, and the first switch and the third switch are turned off, to independently charge the second battery group. Independent charging of the second battery group is stopped until the voltage of the first battery group is equal to the voltage of the second battery group (or the difference between the voltage of the first battery group and the voltage of the second battery group is less than or equal to the second threshold).

In this embodiment of this application, when there is a difference or a large difference between the voltage of the first battery group and the voltage of the second battery group, an independent charging mode (that is, the first battery group or the second battery group is independently charged) may be used to reduce the difference between the voltages of the two battery groups, to equalize the voltages between the two battery groups. This can resolve the circulating current problem of the battery groups in the parallel-connection state, and can significantly improve performance of the circuit. Compared with the voltage equalization mode through the first branch, the independent charging mode can ensure a higher charging voltage, higher charging power, and a higher charging speed.

With reference to the first aspect, in some implementations of the first aspect, the first apparatus includes the first power-consuming apparatus, and the first battery group and the second battery group are configured to discharge to the first power-consuming apparatus. The circuit is configured to: turn on the first switch, the second switch, the third switch, and the fourth switch and turn off the fifth switch and the sixth switch when a sum of the voltage of the first battery group and the voltage of the second battery group is less than or equal to twice a maximum input voltage of the first power-consuming apparatus (in other words, the circuit is configured to discharge the first battery group and the second battery group in parallel).

Optionally, the circuit may be further configured to: turn on the first switch, the fourth switch, and the sixth switch and turn off the second switch, the third switch, and the fifth switch when the sum of the voltage of the first battery group and the voltage of the second battery group is less than or equal to the maximum input voltage of the first power-consuming apparatus (in other words, the circuit is configured to charge the first battery group and the second battery group in series).

The circuit provided in this embodiment of this application may be configured to discharge the first battery group and the second battery group in series when the sum of the voltage of the first battery group and the voltage of the second battery group is less than or equal to the maximum input voltage of the first power-consuming apparatus. Compared with those in a parallel discharging mode, a current in a series circuit is smaller, and a circuit loss is also smaller in a serial charging mode.

Optionally, the turning on the first switch, the second switch, the third switch, and the fourth switch and turning off the fifth switch and the sixth switch when a sum of the voltage of the first battery group and the voltage of the second battery group is less than or equal to twice a maximum input voltage of the first power-consuming apparatus further includes: when the difference between the voltage of the first battery group and the voltage of the second battery group is greater than a third threshold, turning on the fifth switch, turning on the switch that is in the first switch, the second switch, the third switch, and the fourth switch and that is not connected in parallel to the first branch, and turning off the sixth switch and the switch that is in the first switch, the second switch, the third switch, and the fourth switch and that is connected in parallel to the first branch (in other words, the circuit is configured to equalize the voltage of the first battery group and the voltage of the second battery group); and/or when the difference between the voltage of the first battery group and the voltage of the second battery group is less than or equal to the third threshold, turning on the first switch, the second switch, the third switch, and the fourth switch, and turning off the fifth switch and the sixth switch (in other words, the circuit is configured to discharge the first battery group and the second battery group in parallel).

The third threshold may also be a value like 5 V, 10 V, or 20 V. A specific value may be determined with reference to an actual situation. This is not limited in this application.

In this embodiment of this application, the circuit may be flexibly configured to be in a mode like series discharging, parallel discharging, or voltage equalization based on a relationship between the maximum input voltage of the first power-consuming apparatus and both the voltage of the first battery group and the voltage of the second battery group. In this way, the battery can be more widely compatible with power-consuming apparatuses with different input voltages, thereby improving user experience in supplying power to the outside via a battery.

Similarly, in an actual operation, the circuit may alternatively be configured to independently discharge to the first power-consuming apparatus through the first battery group or the second battery group.

With reference to the first aspect, in some implementations of the first aspect, the first power-consuming apparatus includes a capacitor, the circuit further includes a second branch, the second branch includes a second resistor and a seventh switch that are connected in series, and the second branch is connected in parallel to the first switch, the second switch, the third switch, the fourth switch, or the sixth switch. The second branch is configured to pre-charge the capacitor of the first power-consuming apparatus.

In this embodiment of this application, the first power-consuming apparatus may include the capacitor, and the circuit may further include the second branch. The second branch is mainly configured to pre-charge the capacitor of the first power-consuming apparatus, so that impact on components such as a load and a switch caused by an excessively large circuit current when the switch is directly turned on can be avoided, to protect the components of the circuit, improve safety of the circuit, and prolong a service life of the circuit. With reference to the first aspect, in some implementations of the first aspect, the first resistor and the second resistor are shared resistors, and the fifth switch and the seventh switch are shared switches.

In this embodiment of this application, the first resistor and the second resistor may be shared, and the fifth switch and the seventh switch may be shared, to implement equalization and pre-charging functions through one resistor and one switch (namely, one branch), so that a quantity of components can be reduced, a size of the circuit can be reduced, and costs can be reduced.

With reference to the first aspect, in some implementations of the first aspect, the circuit further includes a second interface and an eighth switch, a first end of the second interface is connected to the positive electrode of the first battery group through the eighth switch, a second end of the second interface is connected to the negative electrode of the second battery group through the fourth switch, the second interface is connected to a second apparatus, and the second apparatus includes a second power supply apparatus or a second power-consuming apparatus.

In this embodiment of this application, the circuit may further include the second interface in addition to the first interface, so that the circuit may be further connected to the second apparatus while being connected to the first apparatus, thereby improving flexibility and wide application of the circuit.

With reference to the first aspect, in some implementations of the first aspect, the second apparatus includes the second power supply apparatus. The circuit is configured to: turn on the fourth switch, the sixth switch, and the eighth switch when the sum of the voltage of the first battery group and the voltage of the second battery group is less than a maximum output voltage of the second power supply apparatus (in other words, when the circuit needs to be configured to charge first battery group and the second battery group in series).

With reference to the first aspect, in some implementations of the first aspect, the second apparatus includes the second power-consuming apparatus. The circuit is configured to: turn on the fourth switch, the sixth switch, and the eighth switch when the sum of the voltage of the first battery group and the voltage of the second battery group is less than or equal to a maximum allowable input voltage of the second power-consuming apparatus (in other words, when the circuit needs to be configured to discharge to the second power-consuming apparatus in series through the first battery group and the second battery group).

With reference to the first aspect, in some implementations of the first aspect, the second power-consuming apparatus includes a capacitor, the circuit further includes a third branch, the third branch includes a third resistor and a ninth switch that are connected in series, and the third branch is connected in parallel to the fourth switch, the sixth switch, or the eighth switch. The third branch is configured to pre-charge the capacitor of the second power-consuming apparatus.

In this embodiment of this application, the second power-consuming apparatus may include the capacitor, and the circuit may further include the third branch. The third branch is mainly configured to pre-charge the capacitor of the second power-consuming apparatus, so that impact on components such as a load and a switch caused by an excessively large circuit current when the switch is directly turned on can be avoided, to protect the components of the circuit.

With reference to the first aspect, in some implementations of the first aspect, the first resistor and the third resistor are shared resistors, and the fifth switch and the ninth switch are shared switches.

In this embodiment of this application, the first resistor and the third resistor may be shared, and the fifth switch and the ninth switch may be shared, to implement equalization and pre-charging functions through one resistor and one switch (namely, one branch), so that a quantity of components can be reduced, a size of the circuit can be reduced, and costs can be reduced.

In conclusion, the first resistor, the second resistor, and the third resistor may be shared resistors, and the fifth switch, the seventh switch, and the ninth switch may be shared switches.

With reference to the first aspect, in some implementations of the first aspect, the eighth switch is located between the first battery group and the first switch, and the first branch is connected in parallel to the first switch, the second switch, the third switch, the fourth switch, or the eighth switch.

According to a second aspect, a control method for a circuit is provided. The circuit includes a first battery group, a second battery group, a first switch, a second switch, a third switch, a fourth switch, and a first branch, where the first branch includes a first resistor and a fifth switch that are connected in series, a positive electrode of the first battery group is electrically connected to a positive electrode of the second battery group through the first switch and the second switch, a negative electrode of the first battery group is electrically connected to a negative electrode of the second battery group through the third switch and the fourth switch, and the first branch is connected in parallel to the first switch, the second switch, the third switch, or the fourth switch. The control method includes: obtaining a voltage of the first battery group and a voltage of the second battery group; and controlling, based on a difference between the voltage of the first battery group and the voltage of the second battery group, a fifth switch in the first branch to be turned on or off. The fifth switch in the first branch can be controlled to be turned on to equalize the voltage of the first battery group and the voltage of the second battery group.

Optionally, when the voltage of the first battery group is not equal to the voltage of the second battery group, the fifth switch may be controlled to be turned on, a switch that is in the first switch, the second switch, the third switch, and the fourth switch and that is not connected in parallel to the first branch may be controlled to be turned on, and a switch that is in the first switch, the second switch, the third switch, and the fourth switch and that is connected in parallel to the first branch may be controlled to be turned off, to equalize the voltage of the first battery group and the voltage of the second battery group.

In this embodiment of this application, based on the foregoing circuit, the fifth switch in the first branch may be controlled to be turned on based on a difference between the voltage of the first battery group and the voltage of the second battery group, to equalize the voltages of the two battery groups. This can resolve a circulating current problem of the battery groups in a parallel-connection state, and can significantly improve performance of the circuit.

With reference to the second aspect, in some implementations of the second aspect, the controlling, based on a difference between the voltage of the first battery group and the voltage of the second battery group, a fifth switch in the first branch to be turned on or off includes: when the difference between the voltage of the first battery group and the voltage of the second battery group is greater than a first threshold, controlling the fifth switch to be turned on and a switch that is in the first switch, the second switch, the third switch, and the fourth switch and that is not connected in parallel to the first branch to be turned on, and controlling a switch that is in the first switch, the second switch, the third switch, and the fourth switch and that is connected in parallel to the first branch to be turned off.

In this embodiment of this application, when the difference between the voltage of the first battery group and the voltage of the second battery group is greater than the first threshold, the voltage of the first battery group and the voltage of the second battery group may be equalized through the first branch, to avoid frequent equalization and reduce waiting time in a use process of a user.

With reference to the second aspect, in some implementations of the second aspect, the circuit further includes a first interface and a sixth switch, the negative electrode of the first battery group is electrically connected to the positive electrode of the second battery group through the sixth switch, a first end of the first interface is connected between the first switch and the second switch, a second end of the first interface is connected between the third switch and the fourth switch, the first interface is configured to connect to a first apparatus, and the first apparatus includes a first power supply apparatus or a first power-consuming apparatus.

With reference to the second aspect, in some implementations of the second aspect, the first apparatus includes the first power supply apparatus. The control method further includes: controlling the first switch, the second switch, the third switch, and the fourth switch to be turned on and controlling the fifth switch and the sixth switch to be turned off when a sum of the voltage of the first battery group and the voltage of the second battery group is less than twice a maximum output voltage of the first power supply apparatus (in other words, the first battery group and the second battery group are controlled to be in parallel charging).

With reference to the second aspect, in some implementations of the second aspect, the control method further includes: controlling the first switch, the fourth switch, and the sixth switch to be turned on and controlling the second switch, the third switch, and the fifth switch to be turned off when the sum of the voltage of the first battery group and the voltage of the second battery group is less than the maximum output voltage of the first power supply apparatus (in other words, the first battery group and the second battery group are controlled to be in serial charging).

With reference to the second aspect, in some implementations of the second aspect, the controlling the first switch, the second switch, the third switch, and the fourth switch to be turned on and controlling the fifth switch and the sixth switch to be turned off when a sum of the voltage of the first battery group and the voltage of the second battery group is less than twice a maximum output voltage of the first power supply apparatus further includes: when the difference between the voltage of the first battery group and the voltage of the second battery group is greater than a second threshold, controlling the fifth switch to be turned on, and the switch that is in the first switch, the second switch, the third switch, and the fourth switch and that is not connected in parallel to the first branch to be turned on, and controlling the sixth switch and the switch that is in the first switch, the second switch, the third switch, and the fourth switch and that is connected in parallel to the first branch to be turned off (in other words, the voltage of the first battery group and the voltage of the second battery group are controlled to be equalized); and/or when the difference between the voltage of the first battery group and the voltage of the second battery group is less than or equal to the second threshold, controlling the first switch, the second switch, the third switch, and the fourth switch to be turned on, and controlling the fifth switch and the sixth switch to be turned off (in other words, the first battery group and the second battery group are controlled to be in parallel charging).

With reference to the second aspect, in some implementations of the second aspect, the first apparatus includes the first power supply apparatus. The control method further includes: controlling the first switch and the third switch to be turned on and controlling the second switch and the fourth switch to be turned off when the voltage of the first battery group is less than the voltage of the second battery group; and/or controlling the second switch and the fourth switch to be turned on and controlling the first switch and the third switch to be turned off when the voltage of the first battery group is greater than the voltage of the second battery group.

With reference to the second aspect, in some implementations of the second aspect, the first apparatus includes the first power-consuming apparatus. The control method further includes: controlling the first switch, the second switch, the third switch, and the fourth switch to be turned on and controlling the fifth switch and the sixth switch to be turned off when a sum of the voltage of the first battery group and the voltage of the second battery group is less than or equal to twice a maximum input voltage of the first power-consuming apparatus (in other words, the first battery group and the second battery group are controlled to be in parallel discharging).

With reference to the second aspect, in some implementations of the second aspect, the control method further includes: controlling the first switch, the fourth switch, and the sixth switch to be turned on and controlling the second switch, the third switch, and the fifth switch to be turned off when the sum of the voltage of the first battery group and the voltage of the second battery group is less than or equal to the maximum input voltage of the first power-consuming apparatus (in other words, the first battery group and the second battery group are controlled to be in series discharging).

With reference to the second aspect, in some implementations of the second aspect, the controlling the first switch, the second switch, the third switch, and the fourth switch to be turned on and controlling the fifth switch and the sixth switch to be turned off when a sum of the voltage of the first battery group and the voltage of the second battery group is less than or equal to twice a maximum input voltage of the first power-consuming apparatus further includes: when the difference between the voltage of the first battery group and the voltage of the second battery group is greater than a third threshold, controlling the fifth switch to be turned on, and the switch that is in the first switch, the second switch, the third switch, and the fourth switch and that is not connected in parallel to the first branch to be turned on, and controlling the sixth switch and the switch that is in the first switch, the second switch, the third switch, and the fourth switch and that is connected in parallel to the first branch to be turned off (in other words, the voltage of the first battery group and the voltage of the second battery group are controlled to be equalized); and/or when the difference between the voltage of the first battery group and the voltage of the second battery group is less than or equal to the third threshold, controlling the first switch, the second switch, the third switch, and the fourth switch to be turned on, and controlling the fifth switch and the sixth switch to be turned off (in other words, the first battery group and the second battery group are controlled to be in parallel discharging).

According to a third aspect, a control method for a circuit is provided. The circuit includes a first battery group and a second battery group, the circuit is configured to be connected to a power supply apparatus, and is configured to charge the first battery group and/or the second battery group via the power supply apparatus, and a working mode of the circuit includes a first mode and a second mode. The control method includes: obtaining a voltage of the first battery group and a voltage of the second battery group; and controlling the circuit to switch to the second mode when a sum of the voltage of the first battery group and the voltage of the second battery group is greater than or equal to a maximum output voltage of the power supply apparatus, where in the first mode, the first battery group and the second battery group are connected in series; and in the second mode, the first battery group and the second battery group are connected in parallel.

In this embodiment of this application, based on the circuit that includes the first battery group and the second battery group and that has working modes of a serial charging mode (namely, the first mode) and a parallel charging mode (namely, the second mode), in a charging process, the voltage of the first battery group and the voltage of the second battery group can be dynamically identified, and the charging mode can be dynamically updated. Specifically, in the charging process, when it is detected that the sum of the voltage of the first battery group and the voltage of the second battery group is greater than or equal to the maximum output voltage of the power supply apparatus, the control circuit may switch from another charging mode to the parallel charging mode. Therefore, when the voltage of the battery group no longer supports an actually used charging mode, a more suitable charging mode can be adjusted to in time for charging, so that charging stagnation can be avoided, and charging reliability can be improved. In addition, a capability of the power supply apparatus can be fully utilized, and a compatibility degree of the power supply apparatus can be improved.

With reference to the third aspect, in some implementations of the third aspect, the method further includes: controlling the circuit to switch to the first mode when the sum of the voltage of the first battery group and the voltage of the second battery group is less than the maximum output voltage of the power supply apparatus.

Based on the solution of this application, in the charging process, when it is detected that the sum of the voltage of the first battery group and the voltage of the second battery group is less than the maximum output voltage of the power supply apparatus, charging may be first controlled to be performed in the serial charging mode. As the voltage of the first battery group and the voltage of the second battery group increase, when it is detected that the sum of the voltage of the first battery group and the voltage of the second battery group is greater than or equal to the maximum output voltage of the power supply apparatus, the circuit may be controlled to switch from the serial charging mode to the parallel charging mode, so that charging stagnation can be avoided, and charging reliability can be improved. In addition, the capability of the power supply apparatus can be fully utilized, and the compatibility degree of the power supply apparatus can be improved.

With reference to the third aspect, in some implementations of the third aspect, the working mode of the circuit further includes a third mode, and the controlling the circuit to switch to the second mode when a sum of the voltage of the first battery group and the voltage of the second battery group is greater than or equal to a maximum output voltage of the power supply apparatus includes: obtaining a difference between the voltage of the first battery group and the voltage of the second battery group when the sum of the voltage of the first battery group and the voltage of the second battery group is greater than or equal to the maximum output voltage of the power supply apparatus; and controlling the circuit to switch to the second mode when the difference between the voltage of the first battery group and the voltage of the second battery group is less than or equal to a first threshold; or controlling the circuit to switch to the third mode when the difference between the voltage of the first battery group and the voltage of the second battery group is greater than the first threshold, where in the third mode, the circuit is configured to charge the first battery group or charge the second battery group.

Optionally, charging the first battery group or charging the second battery group may be charging a low-voltage battery group by a high-voltage battery group (that is, corresponding to the foregoing equalization through the first branch). Alternatively, a battery group with a low voltage may be directly charged via the power supply apparatus until a difference between the voltages of the two battery groups is less than or equal to a threshold, to equalize the voltages of the two battery groups. This can resolve a circulating current problem of the battery groups in a parallel-connection state, and can significantly improve performance of the circuit.

According to a fourth aspect, a control apparatus for a circuit is provided, including: a processing module, configured to perform the control method according to any one of the second aspect or the possible implementations of the second aspect, and/or configured to perform the control method according to any one of the third aspect or the possible implementations of the third aspect.

According to a fifth aspect, a control apparatus for a circuit is provided, including at least one processor. The at least one processor is configured to: be coupled to a memory, and read and execute instructions in the memory, to implement the control method according to any one of the second aspect or the possible implementations of the second aspect, and/or to implement the control method according to any one of the third aspect or the possible implementations of the third aspect.

According to a sixth aspect, a computer-readable storage medium is provided, including instructions, where when the instructions are run on a computer, the computer is enabled to perform the control method in any one of the second aspect or the possible implementations of the second aspect, and/or perform the control method according to any one of the third aspect or the possible implementations of the third aspect.

According to a seventh aspect, a computer program product is provided, including instructions. When the instructions are run on a computer, the control method according to any one of the second aspect or the possible implementations of the second aspect is performed, or the control method according to any one of the third aspect or the possible implementations of the third aspect is performed.

According to an eighth aspect, a computing device is provided, including at least one processor and a memory. The at least one processor is coupled to the memory, and is configured to: read and execute instructions in the memory, to perform the control method according to any one of the second aspect or the possible implementations of the second aspect, and/or perform the control method according to any one of the third aspect or the possible implementations of the third aspect.

According to a ninth aspect, a chip is provided. The chip includes a processor and a data interface, and the processor reads, through the data interface, instructions stored in a memory, to perform the control method according to any one of the second aspect or the possible implementations of the second aspect, and/or perform the control method according to any one of the third aspect or the possible implementations of the third aspect.

Optionally, in an implementation, the chip may further include a memory, the memory stores instructions, the processor is configured to execute the instructions stored in the memory, and when the instructions are executed, the processor is configured to perform the control method according to any one of the second aspect or the possible implementations of the second aspect, and/or perform the control method according to any one of the third aspect or the possible implementations of the third aspect.

According to a tenth aspect, an electronic device is provided, including the circuit according to any one of the first aspect or the possible implementations of the first aspect.

According to an eleventh aspect, a vehicle is provided, including the circuit according to any one of the first aspect or the possible implementations of the first aspect.

### BRIEF DESCRIPTION OF DRAWINGS

FIG. 1 is an example diagram of a vehicle according to an embodiment of this application;
FIG. 2 is an example diagram of a battery circuit;
FIG. 3 is an example diagram of a circuit according to an embodiment of this application;
FIG. 4 is an example diagram of a circuit configured to be in a parallel working mode according to an embodiment of this application;
FIG. 5 is an example diagram of a circuit configured to be in an equalization working mode according to an embodiment of this application;
FIG. 6 is an example diagram of another circuit according to an embodiment of this application;
FIG. 7 is an example diagram of another circuit configured to be in a series working mode according to an embodiment of this application;
FIG. 8 is an example diagram of another circuit configured to be in a parallel working mode according to an embodiment of this application;
FIG. 9 is an example diagram of another circuit configured to be in an equalization working mode according to an embodiment of this application;
FIG. 10 is an example diagram of another circuit configured to be in an independent working mode according to an embodiment of this application;
FIG. 11 is an example diagram of another circuit configured to be in an independent working mode according to an embodiment of this application;
FIG. 12 is an example diagram of another circuit configured to be in a series working mode according to an embodiment of this application;
FIG. 13 is an example diagram of still another circuit according to an embodiment of this application;
FIG. 14 is an example diagram of yet another circuit according to an embodiment of this application;
FIG. 15 is an example diagram of a control method for a circuit according to an embodiment of this application;
FIG. 16 is an example diagram of a control method for another circuit according to an embodiment of this application;
FIG. 17 is an example diagram of a control method for still another circuit according to an embodiment of this application;
FIG. 18 is a specific example diagram of a control method for yet another circuit according to an embodiment of this application;
FIG. 19 is an example diagram of a control apparatus for a circuit according to an embodiment of this application; and
FIG. 20 is an example diagram of a hardware structure of a control apparatus for a circuit according to an embodiment of this application.

### DESCRIPTION OF EMBODIMENTS

The following describes technical solutions of embodiments in this application with reference to accompanying drawings.

The solutions of this application may be applied to fields such as vehicles, terminal products, and home products. For example, the solutions may be applied to a product including a battery, like a smartphone, a desktop computer, a notebook computer, a tablet computer, a wearable device, a home robot, or a mobile carrier.

The mobile carrier may include a road transportation means, a water transportation means, an air transportation means, an industrial device, an agricultural device, an entertainment device, or the like. For example, the mobile carrier may be a vehicle. The vehicle is a vehicle in a broad sense, and may be a means of transportation (like a commercial vehicle, a passenger vehicle, a motorcycle, a flight vehicle, or a train), an industrial vehicle (like a pallet truck, a trailer, or a tractor), an engineering vehicle (like an excavator, a bulldozer, or a crane), an agricultural device (like a lawn mower or a harvester), a recreation device, or a toy vehicle. A type of the vehicle is not specifically limited in embodiments of this application. For another example, the mobile carrier may be a means of transportation like an airplane or a ship.

For ease of understanding, the following describes the technologies in embodiments of this application by using an example in which the solutions are applied to a vehicle.

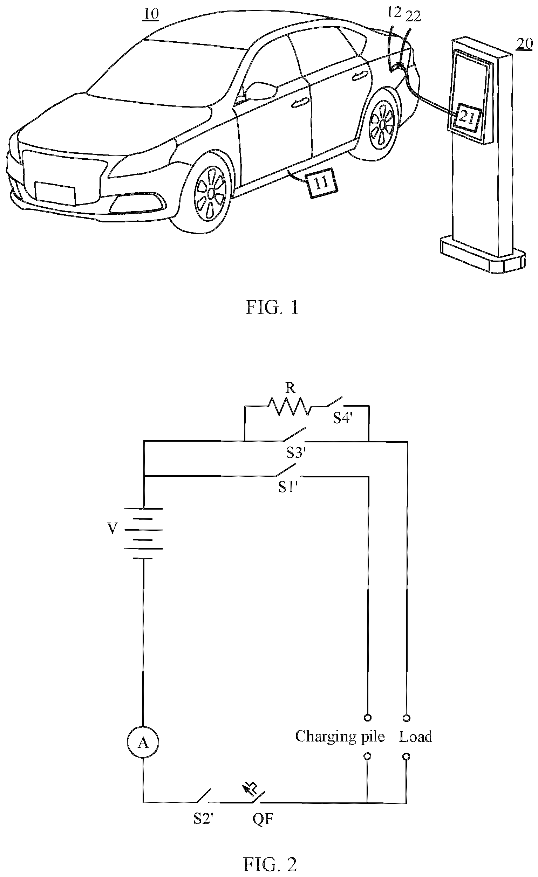

FIG. 1 is an example diagram of a vehicle according to an embodiment of this application. As shown in FIG. 1, the vehicle 10 may be a vehicle including a battery 11, like a pure electric vehicle, a hybrid electric vehicle, an extended-range vehicle, or a fuel cell vehicle. The vehicle 10 may charge the battery 11 through a power supply apparatus. The power supply apparatus may include a wired charging pile 20, a wireless charging apparatus, a power supply vehicle, and the like. For example, when the power supply apparatus is the wired charging pile 20, the power supply apparatus includes a charging pile body 21 and a charging connector 22. The charging connector 22 is configured to connect to a charging interface 12 of the vehicle 10 to charge the battery 11. The charging interface 12 is electrically connected to the battery 11 inside the vehicle 10. It should be understood that positions of the battery 11 and the charging interface 12 shown in the figure are merely examples.

FIG. 2 is an example diagram of a battery circuit. As shown in FIG. 2, the battery circuit mainly includes a battery group V, switches (S1' to S4'), a resistor R, a shunt A, and a circuit breaker QF. The battery circuit may be connected to a charging pile or a load. When the battery circuit is connected to the charging pile, the battery may be charged through the charging pile, or the battery supplies power to a power grid through the charging pile. When the battery circuit is connected to the load, the battery circuit may supply power to the load. The battery group V includes a plurality of battery cells connected in series. Based on the battery circuit, the charging pile can charge only a battery or a vehicle whose charging voltage is within an output voltage range of the charging pile. However, when the charging voltage of the battery exceeds the output voltage range of the charging pile, it is difficult for the charging pile to meet a requirement for a higher charging voltage of the battery. For example, when the output voltage range of the charging pile is 200 V to 500 V, and a required charging voltage of the battery or the vehicle is 800 V, a voltage of the battery or the vehicle can only reach 500 V when the battery or the vehicle is charged based on the charging pile. It is difficult to meet a high voltage requirement of the battery or the vehicle. This leads to poor user experience. In addition, currently, a charging voltage of a new energy vehicle is continuously increasing, for example, from 500 V to a higher voltage like 750 V, 800 V, 850 V, or 900 V. However, currently, most charging piles use a voltage standard of 500 V or an approximate range, and cannot support a charging requirement of a battery with a higher charging voltage.

When the battery circuit includes at least two battery groups, a series connection manner or parallel connection manner between the battery groups may be adjusted to change a potential of an external charging/discharging interface of the battery, so that the battery is compatible with power supply apparatuses with different output voltages or power-consuming apparatuses with different input voltages. Specifically, if the battery circuit includes two battery groups, when the two battery groups are connected in series, an overall output voltage of the battery is high, and a high-voltage power supply apparatus may charge a battery, or a battery may discharge to a high-voltage power-consuming apparatus. When the two battery groups are connected in parallel, a low-voltage power supply apparatus may charge a battery, or a battery may discharge to a low-voltage power-consuming apparatus. A high voltage and a low voltage are only relative values, and are not absolute voltage ranges. For example, if the battery includes 200 battery cells, or referred to as cells (Cells), the first battery group includes 100 cells, and the second battery group includes 100 cells (it is assumed that a battery voltage of each cell is 4 V). When the first battery group and the second battery group are connected in series, an overall output or input voltage of the battery may reach 800 V, and can be compatible with a high-voltage charging and discharging requirement. When the first battery group and the second battery group are connected in parallel, an overall output or input voltage of the battery may reach 400 V, and can be compatible with a low-voltage charging and discharging requirement.

However, when the battery groups in the battery circuit are connected in parallel, if there is a voltage difference between different battery groups, a circulating current problem occurs, and use performance of the battery circuit is affected.

In view of this, embodiments of this application provide a circuit (namely, a battery circuit). A first branch is designed in the circuit to equalize voltages between two battery groups. This can resolve a circulating current problem of the battery groups in a parallel-connection state, and can significantly improve performance of the circuit.

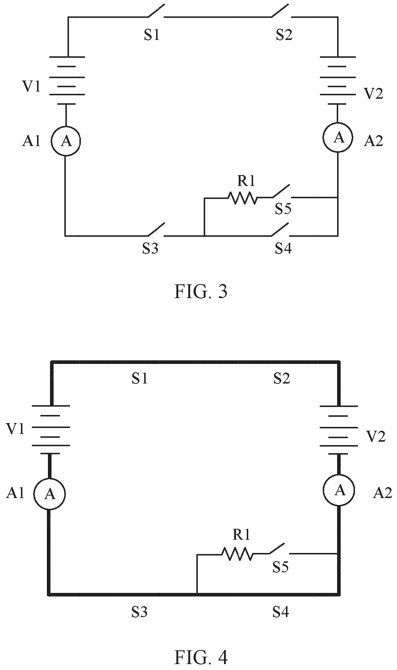

FIG. 3 is an example diagram of a circuit according to an embodiment of this application. The circuit shown in FIG. 3 and structures and a quantity of components in the circuit are merely used as an example of this embodiment of this application, and do not constitute a limitation on this application.

As shown in FIG. 3, the circuit includes a first battery group V1, a second battery group V2, a first switch S1, a second switch S2, a third switch S3, a fourth switch S4, and a first branch. The first branch includes a first resistor R1 and a fifth switch S5 that are connected in series.

A positive electrode of the first battery group V1 is electrically connected to a positive electrode of the second battery group V2 through the first switch S1 and the second switch S2. A negative electrode of the first battery group V1 is electrically connected to a negative electrode of the second battery group V2 through the third switch S3 and the fourth switch S4.

The circuit shown in FIG. 3 is used for description in this embodiment. The first branch is connected in parallel to the fourth switch S4. In the circuit provided in this embodiment of this application, the first branch may be further connected in parallel to any one of the first switch S1, the second switch S2, the third switch S3, or the fourth switch S4. In addition, the circuit may include one or more first branches, and the one or more first branches may be respectively connected in parallel to different switches. Positions and a quantity of first branches are not limited in embodiments of this application. However, for ease of description, an example in which one first branch is included is used for description.

Based on the circuit shown in FIG. 3, if the first switch S1, the second switch S2, the third switch S3, and the fourth switch S4 are turned on, and the fifth switch S5 is turned off, the first battery group V1 and the second battery group V2 are in a parallel-connection state (refer to FIG. 4). However, if there is a difference between a voltage of the first battery group V1 and a voltage of the second battery group V2, a circulating current problem occurs when the first battery group V1 and the second battery group V2 are connected in parallel. In this case, turning on or turning off a parallel-connection loop may affect a service life of the switch, and even cause adhesion of the switch. This increases a battery loss and affects security and performance of the circuit.

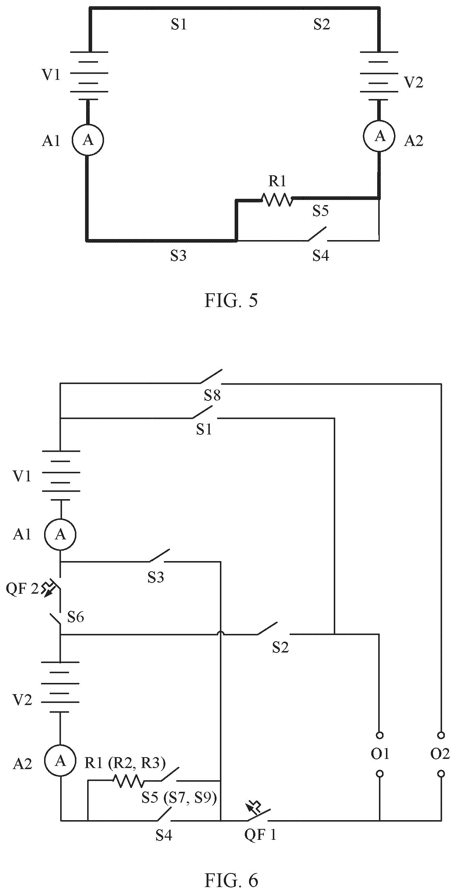

When the voltage of the first battery group V1 is not equal to the voltage of the second battery group V2 (in other words, when there is a voltage difference), as shown in FIG. 5, the circuit may be configured to: turn on the fifth switch S5, turn on switches (for example, S1, S2, and S3 in FIG. 5) that are in the first switch S1, the second switch S2, the third switch S3, and the fourth switch S4 and that are not connected in parallel to the first branch, and turn off a switch (for example, S4 in FIG. 5) that is in the first switch S1, the second switch S2, the third switch S3, and the fourth switch S4 and that is connected in parallel to the first branch, so that an equalized current of the voltage of the first battery group V1 and the voltage of the second battery group V2 may be controlled within a security range. This can resolve a circulating current problem in a case in which the battery groups are connected in parallel, and can significantly improve performance of the circuit.

It should be noted that, in an equalization process, the first resistor in the first branch can reduce a current in the circuit, reduce impact on the switch, and ensure safety implementation of the voltage equalization process.

Optionally, when the difference between the voltage of the first battery group V1 and the voltage of the second battery group V2 is greater than a first threshold, the circuit may be configured to: turn on the fifth switch S5, turn on switches (for example, S1, S2, and S3 in FIG. 5) that are in the first switch S1, the second switch S2, the third switch S3, and the fourth switch S4 and that are not connected in parallel to the first branch, and turn off a switch (for example, S4 in FIG. 5) that is in the first switch S1, the second switch S2, the third switch S3, and the fourth switch S4 and that is connected in parallel to the first branch, to equalize the voltage of the first battery group V1 and the voltage of the second battery group V2. This can avoid frequent equalization, and can reduce waiting time in a use process of a user.

The first threshold may be a value like 5 V, 10 V, or 20 V. A specific value may be determined with reference to an actual situation. This is not limited in this application.

Optionally, the voltages of the two battery groups may be equalized after the battery is charged and discharged or when the battery is ready to be in a still state, or the voltages of the two battery groups may be equalized before next charging and discharging. This is not limited in this application. A vehicle including a battery is used as an example. In an implementation, when the vehicle is still and powered off, voltages of two battery groups are obtained. If a difference between voltages of the two battery groups is less than or equal to the first threshold, an equalization function is not activated. If a difference between voltages of the two battery groups is greater than the first threshold, an equalization function is activated to enter an equalization mode, and then the voltages of the two battery groups are obtained in real time. When the difference between the voltages of two battery groups is less than or equal to the first threshold, equalization is ended. In another implementation, when the vehicle is started or the vehicle is connected to a charging pile to prepare for charging, the voltages of the two battery groups may be obtained, and whether equalization is required is determined based on the difference between the voltages of the two battery groups.

In a possible implementation, as shown in FIG. 6, the circuit may further include a first interface O1 and a sixth switch S6, and the negative electrode of the first battery group V1 is electrically connected to the positive electrode of the second battery group V2 through the sixth switch S6. The positive electrode of the first battery group V1 is connected to the positive electrode of the second battery group V2 through the first switch S2 and the second switch S2. The negative electrode of the first battery group V1 is connected to the negative electrode of the second battery group V2 through the third switch S3 and the fourth switch S4. A first end of the first interface O1 is connected between the first switch S1 and the second switch S2, and a second end of the first interface O1 is connected between the third switch S3 and the fourth switch S4. The first interface O1 may be configured to connect to a first apparatus, and the first apparatus may be a first power supply apparatus or a first power-consuming apparatus. Based on the circuit, the first battery group V1 and the second battery group V2 may be configured to be in a series-connection working mode, a parallel-connection working mode or an independent working mode through turning on or turning off of the switches. The circuit may be compatible with first apparatuses with different voltage ranges in different working modes, so that wide application of the circuit can be improved.

Optionally, the first apparatus may include a first power supply apparatus, and the first power supply apparatus is configured to charge the first battery group V1 and/or the second battery group V2.

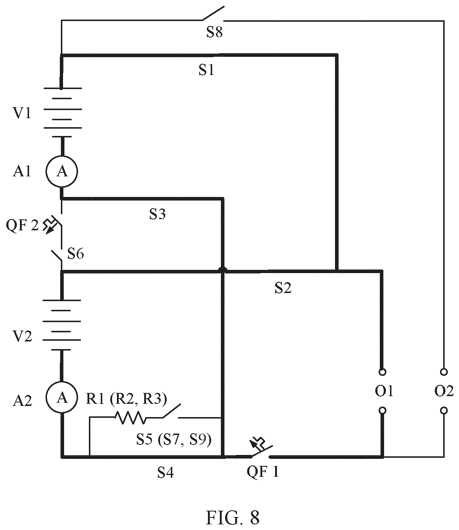

When a sum of the voltage of the first battery group and the voltage of the second battery group is less than twice a maximum output voltage of the first power supply apparatus (that is, when a parallel voltage between the first battery group V1 and the second battery group V2 meets an output voltage range of the first power supply apparatus), as shown in FIG. 8, the circuit may be configured to: turn on the first switch S1, the second switch S2, the third switch S3, and the fourth switch S4, and turn off the fifth switch S5 and the sixth switch S6, so that the first battery group V1 and the second battery group V2 can be in parallel charging via the first power supply apparatus.

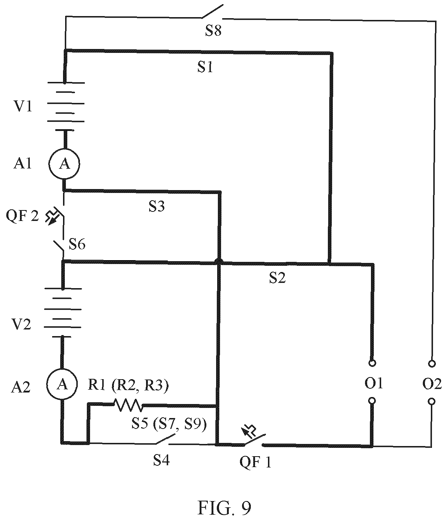

Optionally, when a sum of the voltage of the first battery group V1 and the voltage of the second battery group V2 is less than twice a maximum output voltage of the first power supply apparatus, and a difference between the voltage of the first battery group V1 and the voltage of the second battery group V2 is less than or equal to a second threshold, as shown in FIG. 8, the circuit may be configured to: turn on the first switch S1, the second switch S2, the third switch S3, and the fourth switch S4, and turn off the fifth switch S5 and the sixth switch S6, so that the first battery group V1 and the second battery group V2 can be in parallel charging via the first power supply apparatus. When a sum of the voltage of the first battery group V1 and the voltage of the second battery group V2 is less than twice a maximum output voltage of the first power supply apparatus, and a difference between the voltage of the first battery group V1 and the voltage of the second battery group V2 is greater than a second threshold, as shown in FIG. 9, the circuit may be configured to: turn on the fifth switch S5, and turn on switches (for example, S1, S2, and S3 in FIG. 9) that are in the first switch S1, the second switch S2, the third switch S3, and the fourth switch S4 and that are not connected in parallel to the first branch, turn off the sixth switch S6, and turn off a switch (for example, S4 in FIG. 9) that is in the first switch S1, the second switch S2, the third switch S3, and the fourth switch S4 and that is connected in parallel to the first branch, to equalize the voltage of the first battery group V1 and the voltage of the second battery group V2.

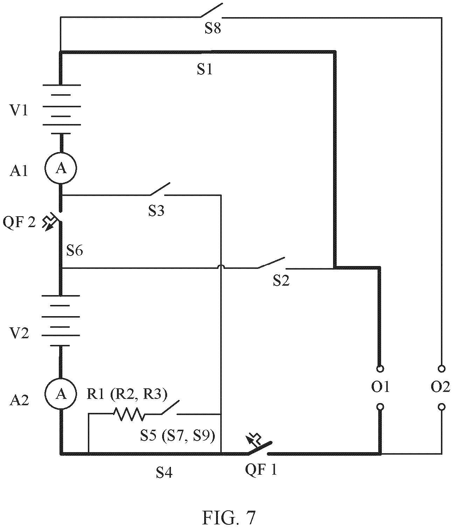

Optionally, when a sum of the voltage of the first battery group V1 and the voltage of the second battery group V2 is less than a maximum output voltage of the first power supply apparatus (that is, when a series voltage between the first battery group V1 and the second battery group V2 meets an output voltage range of the first power supply apparatus), as shown in FIG. 7, the circuit may alternatively be configured to: turn on the first switch S1, the fourth switch S4, and the sixth switch S6, and turn off the second switch S2, the third switch S3, and the fifth switch S5, so that the first battery group V1 and the second battery group V2 can be in serial charging via the first power supply apparatus.

It should be understood that, when the sum of the voltage of the first battery group V1 and the voltage of the second battery group V2 is less than the maximum output voltage of the first power supply apparatus, the circuit is configured to charge the first battery group V1 and the second battery group V2 in series. Compared with those in a parallel charging mode, a current in a series circuit is smaller, and a circuit loss is also smaller in a serial charging mode.

The power supply apparatus in this embodiment of this application is an apparatus that can charge the first battery group V1 and the second battery group V2. The power supply apparatus may be a fixed charging apparatus, or may be a mobile charging apparatus, for example, may be a charger, a charging pile, or a charging vehicle. This is not limited in this application.

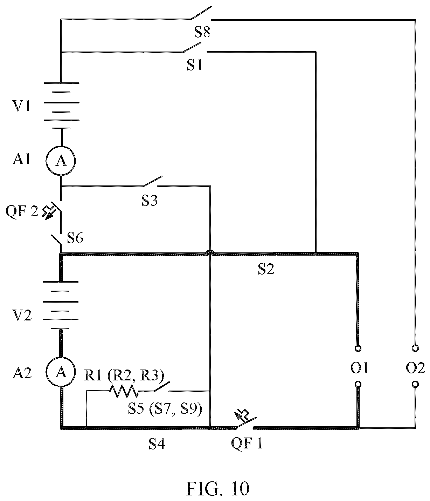

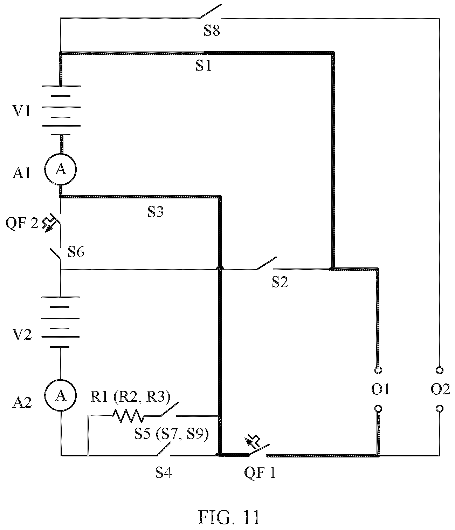

Alternatively, the circuit may be configured to separately charge the first battery group V1 and the second battery group V2 via the first power supply apparatus. For a specific case in which a switch is turned on or turned off, refer to FIG. 10 and FIG. 11. As shown in FIG. 10, when the second battery group V2 is independently charged, the second switch S2 and the fourth switch S4 are turned on, the first switch S2 and the third switch S3 are turned off, and the fifth switch S5 is turned off. As shown in FIG. 11, when the first battery group V1 is independently charged, the first switch S1 and the third switch S3 are turned on, and the second switch S2 and the fourth switch S4 are turned off.

Specifically, the circuit may be configured to: when the voltage of the first battery group V1 is less than the voltage of the second battery group V2, turn on the first switch S1 and the third switch S3, turn off the second switch S2 and the fourth switch S4, and turn off the fifth switch S5; and/or the circuit is configured to: when the voltage of the first battery group V1 is greater than the voltage of the second battery group V2, turn on the second switch S2 and the fourth switch S4, and turn off the first switch S2 and the third switch S3. Alternatively, the circuit may be configured to: when the voltage of the first battery group V1 is less than the voltage of the second battery group V2, and the voltage difference is greater than a preset value, turn on the first switch S1 and the third switch S3, turn off the second switch S2 and the fourth switch S4, and turn off the fifth switch S5; and/or the circuit may alternatively be configured to: when the voltage of the first battery group V1 is greater than the voltage of the second battery group V2, and the voltage difference is greater than a preset value, turn on the second switch S2 and the fourth switch S4, and turn off the first switch S2 and the third switch S3.

In this embodiment of this application, the voltage of the first battery group V1 and the voltage of the second battery group V2 may be equalized by independently charging the first battery group V1 and the second battery group V2. For example, when the voltage of the first battery group V1 is less than the voltage of the second battery group V2, the first switch S1 and the third switch S3 may be turned on, and the second switch S2 and the fourth switch S4 may be turned off, to independently charge the first battery group V1. Independent charging of the first battery group V1 is stopped until the voltage of the first battery group V1 is equal to the voltage of the second battery group V2 (or the difference between the voltage of the first battery group V1 and the voltage of the second battery group V2 is less than or equal to the second threshold). For another example, when the voltage of the first battery group V1 is greater than the voltage of the second battery group V2, the second switch S2 and the fourth switch S4 are turned on, and the first switch S1 and the third switch S3 are turned off, to independently charge the second battery group V2. Independent charging of the second battery group V2 is stopped until the voltage of the first battery group V1 is equal to the voltage of the second battery group V2 (or the difference between the voltage of the first battery group V1 and the voltage of the second battery group is less than or equal to the second threshold V2).

In this embodiment of this application, when there is a difference or a large difference between the voltage of the first battery group V1 and the voltage of the second battery group V2, an independent charging mode (that is, the first battery group V1 and the second battery group V2 are independently charged) may be used to reduce the difference between the voltages of the two battery groups, to equalize the voltages between the two battery groups. This can resolve the circulating current problem of the battery groups in the parallel-connection state, and can significantly improve performance of the circuit. Compared with the voltage equalization mode through the first branch, the independent charging mode can ensure a higher charging voltage, higher charging power, and a higher charging speed.

Optionally, the second threshold may also be a value like 5 V, 10 V, or 20 V. A specific value may be determined with reference to an actual situation. This is not limited in this application.

The output voltage range of the power supply apparatus in this embodiment of this application is an output voltage capability range of the power supply apparatus. For example, an output voltage capability range of a power supply apparatus with a maximum output voltage of 500 V may be set to 200 V to 500 V, and an output voltage capability range of a power supply apparatus with a maximum output voltage of 800 V may be set to 400 V to 800 V. That the output voltage range of the first power supply apparatus is met means that an output voltage falls within the output voltage range of the first power supply apparatus.

In this embodiment of this application, the circuit may be flexibly configured to be in a working mode like serial charging, parallel charging, or voltage equalization based on a relationship between the maximum output voltage (or the output voltage range) of the first power supply apparatus and both the voltage of the first battery group V1 and the voltage of the second battery group V2. In this way, the battery can be more widely compatible with more power supply apparatuses with different supply voltages, thereby improving charging experience of the user.

Optionally, the first apparatus may include a first power-consuming apparatus, and the first battery group V1 and the second battery group V2 are configured to discharge to the first power-consuming apparatus.

When a sum of the voltage of the first battery group V1 and the voltage of the second battery group V2 is less than or equal to twice a maximum input voltage of the first power-consuming apparatus (that is, when a parallel voltage between the first battery group V1 and the second battery group V2 meets an input voltage range of the first power-consuming apparatus), as shown in FIG. 8, the circuit may be configured to: turn on the first switch S1, the second switch S2, the third switch S3, and the fourth switch S4, and turn off the fifth switch S5 and the sixth switch S6, so that the first battery group V1 and the second battery group V2 are in parallel discharging.

Optionally, when a sum of the voltage of the first battery group V1 and the voltage of the second battery group V2 is less than or equal to twice a maximum input voltage of the first power-consuming apparatus, and a difference between the voltage of the first battery group V1 and the voltage of the second battery group V2 is less than or equal to a third threshold, as shown in FIG. 8, the circuit may be configured to: turn on the first switch S1, the second switch S2, the third switch S3, and the fourth switch S4, and turn off the fifth switch S5 and the sixth switch S6, so that the first battery group V1 and the second battery group V2 are in parallel discharging. When a sum of the voltage of the first battery group V1 and the voltage of the second battery group V2 is less than or equal to twice a maximum input voltage of the first power-consuming apparatus, and a difference between the voltage of the first battery group V1 and the voltage of the second battery group V2 is greater than a third threshold, as shown in FIG. 9, the circuit may be configured to: turn on the fifth switch S5, turn on a switch that is in the first switch S1, the second switch S2, the third switch S3, and the fourth switch S4 and that is not connected in parallel to the first branch, turn off the sixth switch S6, and turn off a switch that is in the first switch S1, the second switch S2, the third switch S3, and the fourth switch S4 and that is connected in parallel to the first branch, to equalize the voltage of the first battery group V1 and the voltage of the second battery group V2.

Optionally, when a sum of the voltage of the first battery group V1 and the voltage of the second battery group V2 is less than or equal to a maximum input voltage of the first power-consuming apparatus (that is, when a series voltage between the first battery group V1 and the second battery group V2 meets an input voltage range of the first power-consuming apparatus), as shown in FIG. 7, the circuit may alternatively be configured to: turn on the first switch S1, the fourth switch S4, and the sixth switch S6, and turn off the second switch S2, the third switch S3, and the fifth switch S5, so that the first battery group V1 and the second battery group V2 are in series discharging.

It should be understood that, when the sum of the voltage of the first battery group and the voltage of the second battery group is less than or equal to the maximum input voltage of the first power-consuming apparatus, the circuit is configured to discharge the first battery group and the second battery group in series. Compared with parallel discharging, in series discharging, a current in the series circuit is smaller, and a circuit loss is also smaller.

The power-consuming apparatus in this embodiment of this application may include another vehicle and a camping electric appliance (for example, a lighting device, an electromagnetic oven, a heating device, or an electric oven).

The third threshold may also be a value like 5 V, 10 V, or 20 V. A specific value may be determined with reference to an actual situation. This is not limited in this application.

Similarly, in an actual operation, the circuit may also be configured to separately discharge to the first power-consuming apparatus through the first battery group V1 and the second battery group V2. For a specific case in which a switch is turned on or turned off, refer to descriptions in FIG. 10, FIG. 11, and other embodiments. Details are not described herein again.

The input voltage range of the power-consuming apparatus mentioned in this embodiment of this application is an input voltage capability range of the power-consuming apparatus.

In this embodiment of this application, the circuit may be flexibly configured to be in a mode like series discharging, parallel discharging, or voltage equalization based on a relationship between the maximum input voltage (or the input voltage range) of the first power-consuming apparatus and both the voltage of the first battery group V1 and the voltage of the second battery group V2. In this way, the battery can be more widely compatible with power-consuming apparatuses with different input voltages, thereby improving user experience in supplying power to the outside via a battery.

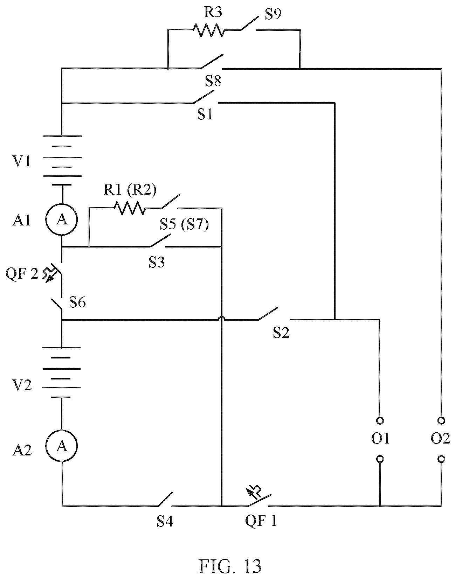

Optionally, the first power-consuming apparatus may include a capacitor, the circuit may further include a second branch, and the second branch includes a second resistor R2 and a seventh switch S7 that are connected in series, the second branch is connected in parallel to one of the first switch S1, the second switch S2, the third switch S3, the fourth switch S4, or the sixth switch S6 (for example, refer to FIG. 6 to FIG. 13). The second branch is configured to pre-charge the capacitor of the first power-consuming apparatus, so that impact on components such as a load and a switch caused by an excessively large circuit current when the switch is directly turned on can be avoided, to protect the components of the circuit, improve safety of the circuit, and prolong a service life of the circuit.

The capacitor of the first power-consuming apparatus may be pre-charged by turning on a switch of the second branch and a switch that is in a pre-charging loop and that is not connected in parallel to the second branch, and turning off a switch connected in parallel to the second branch and another switch. For example, a battery loop shown in FIG. 6 is used as an example. If the pre-charging loop includes only the second battery group V2, the capacitor of the first power-consuming apparatus may be pre-charged by turning on the second switch S2 and the seventh switch S7, and turning off the fourth switch S4 and another switch. If the pre-charging loop includes the first battery group V1 and the second battery group V2, the capacitor of the first power-consuming apparatus may be pre-charged by turning on the first switch S1, the sixth switch S6, and the seventh switch S7, and turning off the fourth switch S4 and another switch.

The circuit may include one or more second branches, and the one or more second branches may be separately connected in parallel to different switches. Positions and a quantity of second branches are not limited in this embodiment of this application. In addition, a specific disposing position of the second branch and a turn-off/turn-on status may be determined with reference to a specific working mode, to ensure that the capacitor can be pre-charged during series discharging, parallel discharging, and independent discharging.

Optionally, the first resistor R1 and the second resistor R2 may be a same shared resistor, and the fifth switch S5 and the seventh switch S7 may be a same shared switch (for example, as shown in FIG. 6 to FIG. 13), to implement equalization and pre-charging functions through one resistor and one switch (that is, one branch). This can reduce components, can reduce a size of the circuit, and can reduce costs.

Optionally, as shown in FIG. 6, the circuit may further include a second interface O2 and an eighth switch S8. A first end of the second interface O2 is connected to the positive electrode of the first battery group V1 through the eighth switch S8, and a second end of the second interface O2 is connected to the negative electrode of the second battery group V2 through the fourth switch S4. The second interface O2 is configured to connect to a second apparatus, and the second apparatus includes a second power supply apparatus or a second power-consuming apparatus. The circuit may be further connected to the second apparatus while being connected to the first apparatus, so that flexibility and wide application of the circuit can be improved.

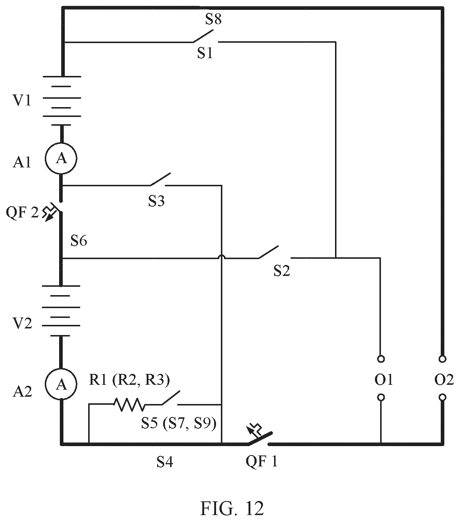

Optionally, the second apparatus may include a second power supply apparatus. As shown in FIG. 12, the circuit may be configured to: when the sum of the voltage of the first battery group V1 and the voltage of the second battery group V2 is less than the maximum output voltage of the second power supply apparatus (that is, when the circuit may be configured to charge the first battery group V1 and the second battery group V2 in series), turn on the fourth switch S4, the sixth switch S6, and the eighth switch S8.

Optionally, the second apparatus may include a second power-consuming apparatus. As shown in FIG. 12, the circuit may be configured to: when the sum of the voltage of the first battery group V1 and the voltage of the second battery group V2 is less than or equal to a maximum allowable input voltage of the second power-consuming apparatus (that is, when the circuit may be configured to discharge to the second power-consuming apparatus in series through the first battery group V1 and the second battery group V2), turn on the fourth switch S4, the sixth switch S6, and the eighth switch S8.

The first interface O1 may be connected to the first power supply apparatus or the first power-consuming apparatus, and the second interface O2 may be connected to the second power supply apparatus or the second power-consuming apparatus. The battery may be simultaneously connected to a plurality of power supply apparatuses and/or power-consuming apparatuses, so that flexibility is significantly improved.

Optionally, the second power-consuming apparatus may include a capacitor, the circuit may further include a third branch, and the third branch includes a third resistor R3 and a ninth switch S9 that are connected in series. The third branch is connected in parallel to the fourth switch S4, the sixth switch S6, or the eighth switch S8 (for example, as shown in FIG. 6 to FIG. 13), and the third branch is configured to pre-charge the capacitor of the second power-consuming apparatus. This can avoid impact on components such as a load and a switch caused by an excessively large circuit current when the switch is directly turned on, to protect the components of the circuit.

The capacitor of the second power-consuming apparatus may be pre-charged by turning on a switch of the third branch and a switch that is in the pre-charging loop and that is not connected in parallel to the third branch, and turning off a switch connected in parallel to the third branch and another switch. For example, the battery loop shown in FIG. 6 is used as an example. The capacitor of the second power-consuming apparatus may be pre-charged by turning on the eighth switch S8, the sixth switch S6, and the ninth switch S9, and turning off the fourth switch S4 and another switch.

Optionally, the first resistor R1 and the third resistor R3 may be a same shared resistor, and the fifth switch S5 and the ninth switch S9 may be a same shared switch (for example, as shown in FIG. 6 to FIG. 12), to implement equalization and pre-charging functions through one resistor and one switch (that is, one branch). This can reduce components, can reduce a size of the circuit, and can reduce costs.

Further, the first resistor R1, the second resistor R2, and the third resistor R3 may be a same shared resistor, and the fifth switch S5, the seventh switch S7, and the ninth switch S9 may be a same shared switch (for example, as shown in FIG. 6 to FIG. 12). This can further reduce components, can reduce the size of the circuit, and can reduce costs.

It should be understood that, after the resistors are shared, both a pre-charging function and an equalization function can be implemented. In this application, the resistors may also be denoted as resistors shared for pre-charging and equalization.

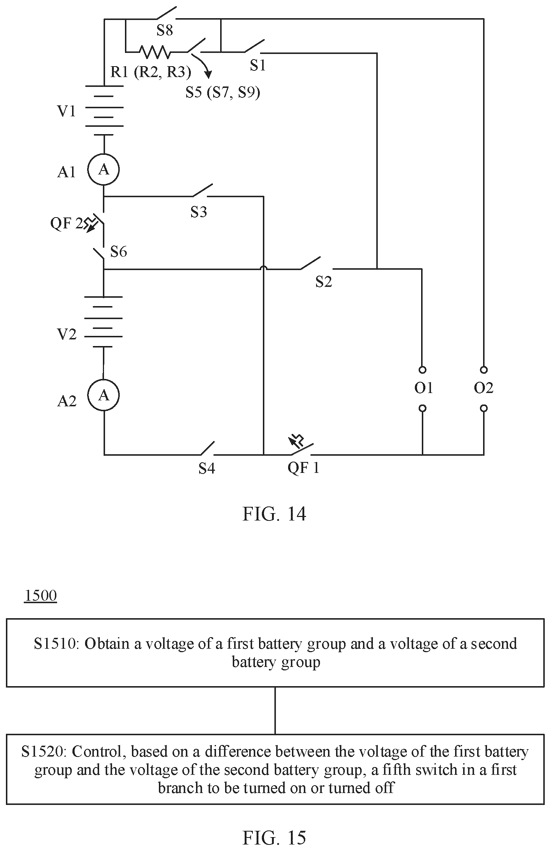

Optionally, the foregoing circuit may be presented in a plurality of different forms. As shown in FIG. 14, the eighth switch S8 may alternatively be located between the first battery group V1 and the first switch S1. In this case, the first branch and/or the second branch may alternatively be connected in parallel to the eighth switch S8. A specific position of the eighth switch S8 is not limited in this embodiment of this application.

The switch in embodiments of this application may include any one of all components that can implement circuit connection and disconnection, such as a metal oxide semiconductor field effect transistor (metal oxide semiconductor field effect transistor, MOSFET), an insulated gate bipolar transistor (insulated gate bipolar transistor, IGBT), a bipolar junction transistor (bipolar junction transistor, BJT), a relay, and a contactor. In addition, in an actual operation, the battery circuit may alternatively include more or fewer switches. For example, a switch may be disposed at a negative electrode of the first interface O1. This is not limited in this application.

Optionally, the circuit provided in embodiments of this application may further include a first ammeter A1 and a second ammeter A2. The first ammeter A1 is configured to detect a current of a branch in which the first battery group V1 is located, and the first ammeter A2 is configured to detect a current of a branch in which the first battery group V2 is located. Positions of the ammeters in FIG. 3 to FIG. 14 are merely examples. This is not limited in this application.

Optionally, the circuit provided in embodiments of this application may further include a circuit breaker (which may also be denoted as a fuse), so that the circuit can be disconnected when the circuit is faulty (for example, a switch failure or a battery short-circuit), to prevent damage to a component. Positions and quantities of first circuit breakers QF 1 and QF 2 shown in FIG. 6 to FIG. 14 are merely examples. In practice, more or fewer circuit breakers may be included, and may be arranged based on an actual requirement.

FIG. 15 is an example diagram of a control method for a circuit according to an embodiment of this application. The control method 1500 may be applied to any circuit provided in embodiments of this application. As shown in FIG. 15, the control method includes steps S1510 and S1520. The following describes the two steps.

S1510: Obtain a voltage of a first battery group V1 and a voltage of a second battery group V2.

S1520: Control, based on a difference between the voltage of the first battery group V1 and the voltage of the second battery group V2, a fifth switch S5 in a first branch to be turned on or turned off. The fifth switch S5 in the first branch can be controlled to be turned on to equalize the voltage of the first battery group V1 and the voltage of the second battery group V2.

Specifically, when the voltage of the first battery group V1 is not equal to the voltage of the second battery group V2 (in other words, when there is a voltage difference), the fifth switch S5 may be controlled to be turned on, a switch that is in the first switch S1, the second switch S2, the third switch S3, and the fourth switch S4 and that is not connected in parallel to the first branch may be controlled to be turned on, and a switch that is in the first switch S1, the second switch S2, the third switch S3, and the fourth switch S4 and that is connected in parallel to the first branch may be controlled to be turned off, to equalize the voltage of the first battery group V1 and the voltage of the second battery group V2.

In this embodiment of this application, based on the foregoing circuit, the fifth switch S5 in the first branch may be controlled to be turned on based on the difference between the voltage of the first battery group V1 and the voltage of the second battery group V2, to equalize the voltages of the two battery groups. This can resolve a circulating current problem of the battery groups in a parallel-connection state when there is a voltage difference between different battery groups, and can significantly improve performance of the circuit.

Optionally, when the difference between the voltage of the first battery group V1 and the voltage of the second battery group V2 is greater than a first threshold, the fifth switch S5 is controlled to be turned on, a switch that is in the first switch S1, the second switch S2, the third switch S3, and the fourth switch S4 and that is not connected in parallel to the first branch is controlled to be turned on, and a switch that is in the first switch S1, the second switch S2, the third switch S3, and the fourth switch S4 and that is connected in parallel to the first branch is controlled to be turned off, to equalize the voltage of the first battery group V1 and the voltage of the second battery group V2. This can avoid frequent equalization, and a user does not need to wait for a long time in a use process, thereby improving user experience.

Optionally, the circuit may further include a first interface O1 and a sixth switch S6. As shown in FIG. 6, the negative electrode of the first battery group V1 is electrically connected to the positive electrode of the second battery group V2 through the sixth switch S6, a first end of the first interface O1 is connected between the first switch S1 and the second switch S2, and a second end of the first interface O1 is connected between the third switch S3 and the fourth switch S4. The first interface O1 may be configured to connect to a first apparatus.

Optionally, the first apparatus may include a first power supply apparatus, and the first power supply apparatus is configured to charge the first battery group V1 and/or the second battery group V2.

The control method 1500 further may include: when a sum of the voltage of the first battery group V1 and the voltage of the second battery group V2 is less than twice a maximum output voltage of the first power supply apparatus (that is, when a parallel voltage between the first battery group V1 and the second battery group V2 meets an output voltage range of the first power supply apparatus), as shown in FIG. 8, controlling the first switch S1, the second switch S2, the third switch S3, and the fourth switch S4 to be turned on, and controlling the fifth switch S5 and the sixth switch S6 to be turned off, so that the first battery group V1 and the second battery group V2 are in parallel charging.

Optionally, when a sum of the voltage of the first battery group V1 and the voltage of the second battery group V2 is less than twice a maximum output voltage of the first power supply apparatus, and the difference between the voltage of the first battery group V1 and the voltage of the second battery group V2 is less than or equal to a second threshold, as shown in FIG. 8, the first switch S1, the second switch S2, the third switch S3, and the fourth switch S4 are controlled to be turned on, and the fifth switch S5 and the sixth switch S6 are controlled to be turned off, so that the first battery group V1 and the second battery group V2 are in parallel charging. When a sum of the voltage of the first battery group V1 and the voltage of the second battery group V2 is less than twice a maximum output voltage of the first power supply apparatus, and the difference between the voltage of the first battery group V1 and the voltage of the second battery group V2 is greater than a second threshold, as shown in FIG. 9, the fifth switch S5 is controlled to be turned on, a switch that is in the first switch S1, the second switch S2, the third switch S3, and the fourth switch S4 and that is not connected in parallel to the first branch is controlled to be turned on, and the sixth switch S6 and a switch that is in the first switch S1, the second switch S2, the third switch S3, and the fourth switch S4 and that is connected in parallel to the first branch are controlled to be turned off, to equalize the voltage of the first battery group V1 and the voltage of the second battery group V2.

Optionally, when a sum of the voltage of the first battery group V1 and the voltage of the second battery group V2 is less than a maximum output voltage of the first power supply apparatus (that is, when a series voltage between the first battery group V1 and the second battery group V2 meets an output voltage range of the first power supply apparatus), as shown in FIG. 7, the first switch S1, the fourth switch S4, and the sixth switch S6 are controlled to be turned on, and the second switch S2, the third switch S3 and the fifth switch S5 are controlled to be turned off, so that the first battery group V1 and the second battery group V2 can be in serial charging via the first power supply apparatus.

Optionally, the control method 1500 may further include: when the voltage of the first battery group V1 is less than the voltage of the second battery group V2, controlling the first switch S1 and the third switch S3 to be turned on, and controlling the second switch S2 and the fourth switch S4 to be turned off; and/or when the voltage of the first battery group V1 is greater than the voltage of the second battery group V2, controlling the second switch S2 and the fourth switch S4 to be turned on, and controlling the first switch S1 and the third switch S3 to be turned off.

Optionally, the first apparatus may include a first power-consuming apparatus, and the first battery group V1 and the second battery group V2 are configured to discharge to the first power-consuming apparatus.

The control method 1500 further may include: when a sum of the voltage of the first battery group V1 and the voltage of the second battery group V2 is less than or equal to twice a maximum input voltage of the first power-consuming apparatus (that is, when a parallel voltage between the first battery group V1 and the second battery group V2 meets an input voltage range of the first power-consuming apparatus), as shown in FIG. 8, controlling the first switch S1, the second switch S2, the third switch S3, and the fourth switch S4 to be turned on, and controlling the fifth switch S5 and the sixth switch S6 to be turned off, so that the first battery group V1 and the second battery group V2 are in parallel discharging.

Optionally, when a sum of the voltage of the first battery group V1 and the voltage of the second battery group V2 is less than or equal to twice a maximum input voltage of the first power-consuming apparatus, and the difference between the voltage of the first battery group V1 and the voltage of the second battery group V2 is less than or equal to a third threshold, as shown in FIG. 8, the first switch S1, the second switch S2, the third switch S3, and the fourth switch S4 are controlled to be turned on, and the fifth switch S5 and the sixth switch S6 are controlled to be turned off, so that the first battery group V1 and the second battery group V2 are in parallel discharging. When a sum of the voltage of the first battery group V1 and the voltage of the second battery group V2 is less than or equal to twice a maximum input voltage of the first power-consuming apparatus, and the difference between the voltage of the first battery group V1 and the voltage of the second battery group V2 is greater than a third threshold, as shown in FIG. 9, the fifth switch S5 is controlled to be turned on, a switch that is in the first switch S1, the second switch S2, the third switch S3, and the fourth switch S4 and that is not connected in parallel to the first branch is controlled to be turned on, and the sixth switch S6 and a switch that is in the first switch S1, the second switch S2, the third switch S3, and the fourth switch S4 and that is connected in parallel to the first branch are controlled to be turned off, to equalize the voltage of the first battery group V1 and the voltage of the second battery group V2.

The control method 1500 may further include: when a sum of the voltage of the first battery group V1 and the voltage of the second battery group V2 is less than or equal to a maximum input voltage of the first power-consuming apparatus (that is, when a series voltage between the first battery group V1 and the second battery group V2 meets an input voltage range of the first power-consuming apparatus), as shown in FIG. 7, controlling the first switch S1, the fourth switch S4, and the sixth switch S6 to be turned on, and controlling the second switch S2, the third switch S3, and the fifth switch S5 to be turned off, so that the first battery group V1 and the second battery group V2 are in series discharging.

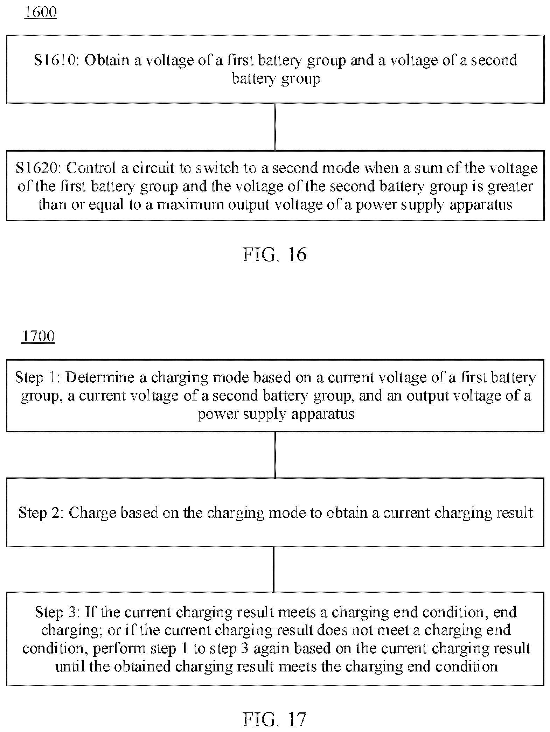

FIG. 16 is an example diagram of a control method for another circuit according to an embodiment of this application. The method 1600 may be applied to a circuit including a first battery group and a second battery group. The circuit is configured to connect to a power supply apparatus, and the power supply apparatus may charge the first battery group and/or the second battery group. A working mode of the circuit includes a first mode and a second mode. In the first mode, the first battery group and the second battery group are connected in series (that is, the first mode may be understood as a serial charging mode). In the second mode, the first battery group and the second battery group are connected in parallel (that is, the second mode may be understood as a parallel charging mode). A specific structure of the circuit is not limited in solutions of this application. In an example, the circuit may be, for example, a part of the circuit that can implement serial/parallel charging in the circuit shown in FIG. 6. The method 1600 includes step S1610 and step S1620.

S 1610: Obtain a voltage of a first battery group and a voltage of a second battery group.

The voltage of the first battery group and the voltage of the second battery group may be monitored in a charging process, to obtain the voltage of the first battery group and the voltage of the second battery group in real time.

S 1620: Control the circuit to switch to the second mode when a sum of the voltage of the first battery group and the voltage of the second battery group is greater than or equal to a maximum output voltage of the power supply apparatus.

In this embodiment of this application, based on the circuit that includes the first battery group and the second battery group and that has working modes of the serial charging mode and the parallel charging mode, in the charging process, the voltage of the first battery group and the voltage of the second battery group can be dynamically identified, and the charging mode can be dynamically updated. Specifically, in the charging process, when it is detected that the sum of the voltage of the first battery group and the voltage of the second battery group is greater than or equal to the maximum output voltage of the power supply apparatus, the control circuit may switch from another charging mode to the parallel charging mode. Therefore, when the voltage of the battery group no longer supports an actually used charging mode, a more suitable charging mode can be adjusted to in time for charging, so that charging stagnation can be avoided, and charging reliability can be improved. In addition, a capability of the power supply apparatus can be fully utilized, and a compatibility degree of the power supply apparatus can be improved.

Optionally, the method 1600 may further include: when the sum of the voltage of the first battery group and the voltage of the second battery group is less than the maximum output voltage of the power supply apparatus, controlling the circuit to switch to the first mode.

Based on the solution of this application, in the charging process, when it is detected that the sum of the voltage of the first battery group and the voltage of the second battery group is less than the maximum output voltage of the power supply apparatus, charging may be first controlled to be performed in the serial charging mode. As the voltage of the first battery group and the voltage of the second battery group increase, when it is detected that the sum of the voltage of the first battery group and the voltage of the second battery group is greater than or equal to the maximum output voltage of the power supply apparatus, the circuit may be controlled to switch from the serial charging mode to the parallel charging mode, so that charging stagnation can be avoided, and charging reliability can be improved. In addition, the capability of the power supply apparatus can be fully utilized, and the compatibility degree of the power supply apparatus can be improved.

Optionally, the working mode of the circuit may further include a third mode. In the third mode, the circuit may be configured to charge the first battery group or charge the second battery group. Specifically, when the sum of the voltage of the first battery group and the voltage of the second battery group is greater than or equal to the maximum output voltage of the power supply apparatus, a difference between the voltage of the first battery group and the voltage of the second battery group may be obtained. When the difference between the voltage of the first battery group and the voltage of the second battery group is less than or equal to a first threshold, the circuit is controlled to switch to the second mode. When the difference between the voltage of the first battery group and the voltage of the second battery group is greater than a first threshold, the circuit is controlled to switch to the third mode.

Charging the first battery group or charging the second battery group may be charging a low-voltage battery group by a high-voltage battery group (that is, corresponding to the foregoing equalization through the first branch). Alternatively, a battery group with a low voltage may be directly charged via the power supply apparatus to reduce the difference between voltages of two battery groups, so as to equalize the voltages of the two battery groups. This can resolve a circulating current problem of the battery groups in a parallel-connection state, and can significantly improve performance of the circuit.

The foregoing control method 1600 is also applicable to a battery discharging process. In the discharging process, a discharging mode (the discharging mode may include, for example, any one or more of a series discharging mode, a parallel discharging mode, or an independent discharging mode) is adjusted in real time based on the voltage of the first battery group, the voltage of the second battery group, and a maximum input voltage of a power-consuming apparatus, to ensure reliability of a discharging operation.

FIG. 17 is an example diagram of a control method of still another circuit according to an embodiment of this application. The method may be applied to a circuit including at least two battery groups (for example, including a first battery group and a second battery group). The circuit may be configured to support a plurality of charging modes, for example, including one or more of a serial charging mode, a parallel charging mode, and an independent charging mode. The method may be applied to any circuit provided in embodiments of this application.

As shown in FIG. 17, the control method 1700 includes step 1 to step 3. The following describes these steps in detail with reference to the accompanying drawings.

Step 1: Determine a charging mode based on a current voltage of the first battery group, a current voltage of the second battery group, and an output voltage of a power supply apparatus.

Step 2: Charge based on the charging mode to obtain a current charging result, where the current charging result includes an updated voltage of the first battery group and an updated voltage of the second battery group.

Step 3: If the current charging result meets a charging end condition, end charging; or if the current charging result does not meet a charging end condition, perform step 1 to step 3 again based on the current charging result until the obtained charging result meets the charging end condition.

The output voltage of the power supply apparatus may be a maximum output voltage of the power supply apparatus, or may be another value within an output voltage range of the power supply apparatus. This is not limited.

Based on the control method, the voltage of the first battery group and the voltage of the second battery group can be dynamically identified in the charging process, and the charging mode can be dynamically updated. Therefore, when the voltage of the battery group no longer supports an actually used charging mode, a more suitable charging mode can be adjusted to in time for charging, so that charging stagnation can be avoided, and charging reliability can be improved. In addition, a capability of the power supply apparatus can be fully utilized, and a compatibility degree of the power supply apparatus can be improved.

Before step 1 is performed, a power supply circuit may be first connected to the power supply apparatus, and the output voltage of the power supply apparatus is obtained.

In step 2, charging may be performed based on preset charging duration and the charging mode. The preset charging duration may be duration such as 1s, 2s, 5s, or 10s. This is not limited in this application. This means that in this embodiment of this application, whether the current charging result meets the charging end condition may be monitored in real time at a specific frequency, and a response is made in time when the charging end condition is not met, so that charging reliability can be further improved.

Optionally, the charging end condition may be that the voltage of the first battery group and the voltage of the second battery group reach a target charging voltage. The target charging voltage may be a value or a voltage range, which is not limited. For another example, the charging end condition may be that a remaining state of charge of a battery reaches a target state of charge. In addition, the charging end condition may alternatively be an interruption operation of a user. A type of the charging end condition is not limited in this application.

Optionally, the determining a charging mode based on a current voltage of the first battery group, a current voltage of the second battery group, and an output voltage of a power supply apparatus may include: if a series voltage or a current voltage sum of the first battery group and the second battery group is less than the output voltage of the power supply apparatus, determining that the charging mode is the serial charging mode.

Optionally, the determining a charging mode based on a current voltage of the first battery group, a current voltage of the second battery group, and an output voltage of a power supply apparatus may include: if a series voltage or a current voltage sum of the first battery group and the second battery group is greater than or equal to the output voltage of the power supply apparatus and is less than twice the output voltage of the power supply apparatus, obtaining a difference between a current voltage of the first battery group and a current voltage of the second battery group; and if the difference between the current voltage of the first battery group and the current voltage of the second battery group is less than or equal to a first threshold, determining that the charging mode is the parallel charging mode; or if the difference between the current voltage of the first battery group and the current voltage of the second battery group is greater than a first threshold, determining that the charging mode is the independent charging mode.

The first threshold may be a value like 5 V, 10 V, or 20 V. A specific value needs to be determined with reference to an actual situation. This is not limited in this application.

Optionally, if the series voltage or the current voltage sum of the first battery group and the second battery group is greater than or equal to twice the output voltage of the power supply apparatus, it is recommended that charging be ended.

Optionally, if it is determined that the charging mode is the independent charging mode, the charging based on the charging mode includes: determining a battery group with a lower current voltage in the first battery group and the second battery group; and charging the battery group with the lower current voltage based on the independent charging mode.

Specifically, the battery group with the lower current voltage may be independently charged, to reduce a difference between the voltages of the two battery groups. When the difference between the voltages of the two battery groups is less than or equal to the first threshold, charging is stopped, and then a charging mode is re-determined based on updated voltages of the two battery groups.

The charging mode may further include a voltage equalization mode (in the equalization mode, a high-voltage battery group may charge a low-voltage battery group). If the sum of the current voltage of the first battery group and the current voltage of the second battery group is greater than or equal to the output voltage of the power supply apparatus and is less than or equal to twice the output voltage of the power supply apparatus, and if the difference between the current voltage of the first battery group and the current voltage of the second battery group is greater than a second threshold, it may be determined that the charging mode is the voltage equalization mode. The second threshold may also be a value like 5 V, 10 V, or 20 V. A specific value needs to be determined with reference to an actual situation. This is not limited in this application.

In an actual operation, when the difference between the current voltage of the first battery group and the current voltage of the second battery group is large, the difference between the voltages of the two battery groups may be reduced in the independent charging mode, or the difference between the voltages of the two battery groups may be reduced in a manner in which the high-voltage battery group charges the low-voltage battery group (that is, corresponding to the foregoing equalization through the first branch). It should be noted that, compared with the voltage equalization mode through the first branch, the independent charging mode can ensure a higher charging voltage, higher charging power, and a higher charging speed.

The foregoing control method 1700 is also applicable to a battery discharging process. In the discharging process, a discharging mode (for example, the discharging mode is any one or more of a series discharging mode, a parallel discharging mode, or an independent discharging mode) is updated and adjusted in real time based on the current voltage of the first battery group, the current voltage of the second battery group, and an input voltage of a power-consuming apparatus, to ensure reliability of a discharging operation.

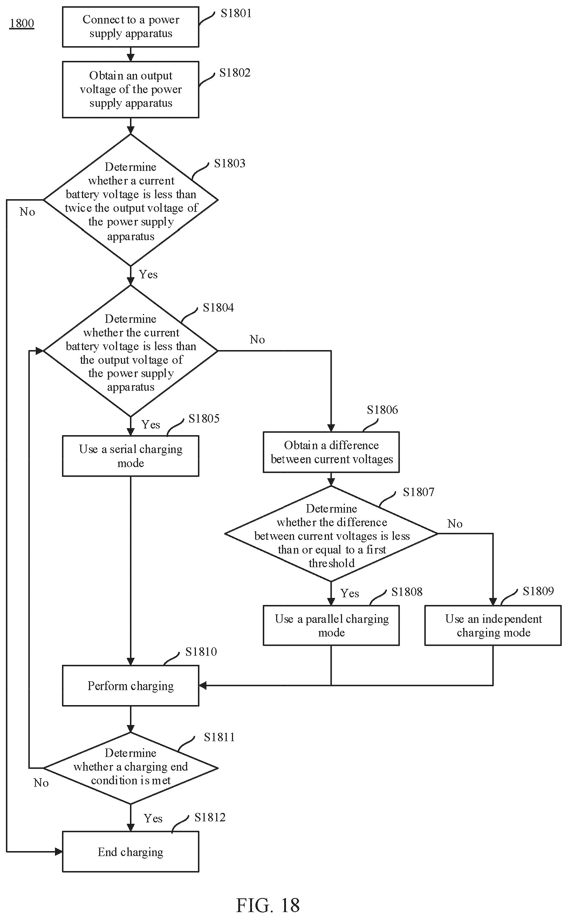

Based on the foregoing control method 1700, FIG. 18 is a specific example diagram of a control method of yet another circuit according to an embodiment of this application. For the circuit, refer to the descriptions of the circuit in the method 1700. Details are not described again. As shown in FIG. 18, the procedure 1800 includes steps S1801 to S1812. The following describes these steps with reference to the accompanying drawings.

S1801: Connect a power supply circuit to a power supply apparatus, and continue to perform step S1802.

S1802: Obtain an output voltage (for example, a maximum output voltage) of the power supply apparatus, and continue to perform step S1803.

S1803: Determine whether a current battery voltage is less than twice the output voltage of the power supply apparatus. The battery voltage may be a series voltage between a first battery group and a second battery group, or a sum of a current voltage of the first battery group and a current voltage of the second battery group. If the current battery voltage is less than twice the output voltage of the power supply apparatus, step S1804 continues to be performed. If the current battery voltage is greater than or equal to twice the output voltage of the power supply apparatus, step S1812 is performed.

S1804: Determine whether the current battery voltage is less than the output voltage of the power supply apparatus. If the current battery voltage is less than the output voltage of the power supply apparatus, step S1805 continues to be performed. If the current battery voltage is greater than or equal to the output voltage of the power supply apparatus, step S1806 is performed.

S1805. Determine to use a serial charging mode, and continue to perform step S1810.

S1806: Obtain a difference between the current voltage of the first battery group and the current voltage of the second battery group, and continue to perform step S1807.

S1807: Determine whether a current battery voltage difference is less than or equal to a first threshold. If the current battery voltage difference is less than or equal to the first threshold, step S1808 is performed; or if the current battery voltage difference is greater than the first threshold, step S1809 is performed.

S1808: Determine to use a parallel charging mode, and continue to perform step S1810.

S1809: Determine to use an independent charging mode, and continue to perform step S1810.

S1810: Perform charging. After charging is performed based on preset duration, an updated voltage is obtained, and step S1811 continues to be performed.

S1811: Determine, based on the updated voltage, whether a charging end condition is met. If the charging end condition is not met, return to step S1804, and continue to repeat the foregoing steps until the obtained updated voltage meets the charging end condition. If the charging end condition is met, perform step S1812.

S1812: End charging.

For specific content in steps S1801 to S1812, refer to related descriptions in the control method 1700. Details are not described again.

With reference to FIG. 18, the following describes a charging process of a vehicle battery by using a vehicle charging scenario as an example.

First, the vehicle includes a battery loop, the battery loop includes the first battery group and the second battery group, and configurable modes of the battery loop include the serial charging mode, the parallel charging mode, and the independent charging mode. Further, it is assumed that a current voltage of the first battery group is 200 V, a current voltage of the second battery group is 220 V, a current total voltage of the two battery groups is 420 V, a target charging voltage is 600 V, preset charging duration is 1s, the first threshold is 10 V, and an output voltage range of a used charging pile is 200 V to 500 V. A charging process is as follows:
Step S1801 is performed to connect the vehicle to the charging pile.
Step S1802 is performed to obtain the output voltage of the charging pile. In this example, the output voltage of the charging pile may be understood as a maximum output voltage 500 V of the charging pile.
Step S1803 is performed. It is determined that a current battery voltage (for example, a series voltage between the first battery group and the second battery group, or the current total voltage 420 V of the first battery group and the second battery group) is less than twice the output voltage of the charging pile, that is, 1000 V.
Steps S1804 and S1805 are performed. If it is determined that the current battery voltage 420 V is less than the maximum output voltage 500 V of the charging pile, it is determined that the charging mode is the serial charging mode.
Step S1810 is performed to perform charging based on the preset charging duration of 1s in the serial charging mode, to obtain a current charging result, that is, a voltage of the first battery group is updated to 200.5 V and a voltage of the second battery group is updated to 220.5 V.
Step S1811 is performed. If it is determined that an updated battery voltage (namely, an updated total voltage 421 V of the first battery group and the second battery group) does not reach the target charging voltage 600 V, that is, the charging end condition is not met, step S1804 is performed, steps S1804, S1805, S1810, and S1811 are cyclically performed again based on the currently updated total battery voltage, until a sum of an updated voltage of the first battery group and an updated voltage of the second battery group reaches the output voltage 500 V of the charging pile, in other words, the voltage of the first battery group is updated to 240 V, and the voltage of the second battery group is updated to 260 V.
Step S1804 continues to be performed. If it is determined that the sum of the updated voltage of the first battery group and the updated voltage of the second battery group is 500 V, which is equal to the output voltage 500 V of the charging pile, the serial charging mode cannot continue to be used, and the charging mode needs to be re-determined.
Step S1806 is performed to obtain a difference between the updated voltage of the first battery group and the updated voltage of the second battery group, where the difference is 20 V.
Steps S1807 and S1809 are performed. When it is determined that the difference 20 V between the updated voltage of the first battery group and the updated voltage of the second battery group is greater than the first threshold 10 V, it is determined that parallel charging cannot be performed currently, and the charging mode is switched to the independent charging mode.
Step 1810 is performed to independently charge the first battery group based on the preset charging duration of 1s in the independent charging mode, to obtain a charging result, that is, the voltage of the first battery group is updated to 241 V, and the voltage of the second battery group is still 260 V.
Step 1811 is performed. If it is determined that a currently updated battery voltage (namely, an updated total voltage 501 V of the first battery group and the second battery group) does not reach the target charging voltage 600 V, that is, the charging end condition is not met, step S1804 is performed, steps S1804, S1806, S1807, and S1809 to S1811 are cyclically performed again based on the updated voltage of the first battery group and the updated voltage of the second battery group, until the voltage of the first battery group is updated to 250 V, and the voltage of the second battery group is still 260 V.
Step S1804 continues to be performed. It is determined that a sum of the currently updated voltage of the first battery group and the currently updated voltage of the second battery group is 510 V, which is greater than the output voltage 500 V of the charging pile.
Step S1806 is performed to obtain a difference between the updated voltage of the first battery group and the updated voltage of the second battery group, where the difference is 10 V.
Steps S1807 and S1808 are performed. If it is determined that the difference 10 V between the currently updated voltage of the first battery group and the currently updated voltage of the second battery group is equal to the first threshold 10 V, it is determined that the parallel charging mode can be used currently.
Step S1810 is performed to perform charging based on the preset charging duration of 1s in the parallel charging mode, to obtain a current charging result. In this case, a voltage of the first battery group is updated to 251 V, a voltage of the second battery group is updated to 261 V, and a current total voltage is updated to 512 V.
Step S1811 is performed. If it is determined that the currently updated total voltage 512 V of the first battery group and the second battery group does not reach the target charging voltage 600 V, that is, the charging end condition is still not met, step S1804 is performed, steps S1804, S1806 to S1808, S1810, and S1811 are cyclically performed again based on the currently updated battery voltage, until the voltage of the first battery group is updated to 295 V, the voltage of the second battery group is updated to 305 V, and the total voltage is updated to 600 V. In addition, if it is determined that the updated total voltage of the first battery group and the second battery group is equal to the target charging voltage 600 V, that is, the charging end condition is met, S1812 is performed to end charging.

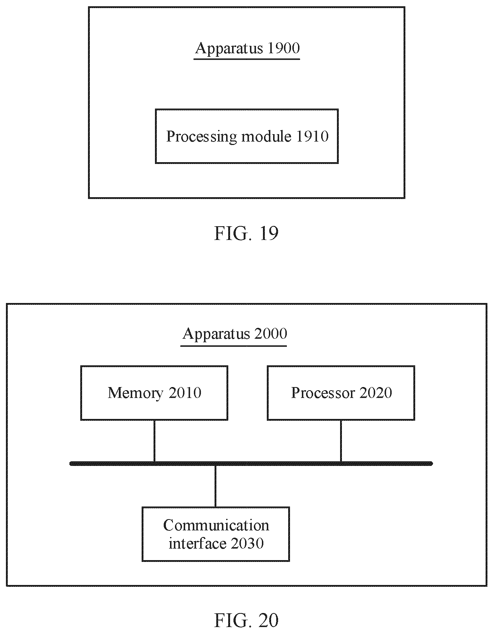

FIG. 19 is an example diagram of a control apparatus for a circuit according to an embodiment of this application. As shown in FIG. 19, the apparatus 1900 includes a processing module 1910. The processing module 1910 is configured to perform the control method 1500, and/or configured to perform the control method 1600, and/or configured to perform the control method 1700, and/or configured to perform the control method 1800.

FIG. 20 is an example diagram of a hardware structure of a control apparatus for a circuit according to an embodiment of this application. Optionally, the apparatus 2000 may be specifically a computer device. The apparatus 2000 includes a memory 2010, a processor 2020, and a communication interface 2030. The memory 2010, the processor 2020, and the communication interface 2030 may implement mutual communication connections through buses.

The memory 2010 may be a read-only memory (Read-Only Memory, ROM), a static storage device, a dynamic storage device, or a random access memory (Random Access Memory, RAM). The memory 2010 may store a program, and when the program stored in the memory 2010 is executed by the processor 2020, the processor 2020 is configured to perform the steps of the control method 1500 in embodiments of this application and/or is configured to perform the steps of the control method 1600 in embodiments of this application and/or is configured to perform the steps of the control method 1700 in embodiments of this application and/or is configured to perform the steps of the control method 1800 in embodiments of this application.

The processor 2020 may be a general-purpose central processing unit (Central Processing Unit, CPU), a microprocessor, an application-specific integrated circuit (Application-Specific Integrated Circuit, ASIC), a graphics processing unit (Graphics Processing Unit, GPU), or one or more integrated circuits, and is configured to execute a related program, to implement the control method 1500 in the method embodiments of this application and/or implement the control method 1600 in the method embodiments of this application and/or implement the control method 1700 in the method embodiments of this application and/or implement the control method 1800 in the method embodiments of this application.

The processor 2020 may alternatively be an integrated circuit chip and has a signal processing capability. In an implementation process, the control method 1500 and/or the control method 1600 and/or the control method 1700 and/or the control method 1800 in this application may be completed through an integrated logic circuit of hardware in the processor 2020 or an instruction in a form of software.

The processor 2020 may alternatively be a general-purpose processor, a digital signal processor (Digital Signal Processor, DSP), an ASIC, a field programmable gate array (Field Programmable Gate Array, FPGA) or another programmable logic device, a discrete gate or transistor logic device, or a discrete hardware component. The processor 2020 may implement or perform the methods, the steps, and the logical block diagrams disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. The software module may be located in a mature storage medium in the art, like a random access memory, a flash memory, a read-only memory, a programmable read-only memory, an electrically erasable programmable memory, or a register. The storage medium is located in the memory 2010. The processor 2020 reads information in the memory 2010, and completes, in combination with hardware of the processor 2020, functions that need to be performed by modules included in the apparatus in embodiments of this application. Alternatively, the control method 1500 and/or the control method 1600 and/or the control method 1700 and/or the control method 1800 in the method embodiments of this application are/is performed.

The communication interface 2030 uses a transceiver apparatus, for example, but not limited to a transceiver, to implement communication between the apparatus 2000 and another device or a communication network.

An embodiment of this application further provides a computer-readable storage medium, including instructions. When the instructions are run on a computer, the computer is enabled to perform the control method 1500, and/or the control method 1600, and/or the control method 1700, and/or the control method 1800.

An embodiment of this application further provides a computer program product, including instructions. When the instructions are run on a computer, the control method 1500 is performed, the control method 1600 is performed, the control method 1700 is performed, or the control method 1800 is performed.

An embodiment of this application further provides a computing device, including at least one processor and a memory. The at least one processor is coupled to the memory, and is configured to: read and execute instructions in the memory, to perform the control method 1500, and/or perform the control method 1600, and/or perform the control method 1700, and/or perform the control method 1800.

An embodiment of this application further provides a chip. The chip includes a processor and a data interface. The processor reads, through the data interface, instructions stored in a memory, to perform the control method 1500, and/or perform the control method 1600, and/or perform the control method 1700, and/or perform the control method 1800.

Optionally, in an implementation, the chip may further include a memory. The memory stores instructions. The processor is configured to execute the instructions stored in the memory. When the instructions are executed, the processor is configured to perform the control method 1500, and/or perform the control method 1600, and/or perform the control method 1700, and/or perform the control method 1800.

An embodiment of this application further provides an electronic device, including any circuit provided in embodiments of this application.

An embodiment of this application further provides a vehicle, including any circuit provided in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions of embodiments.

Functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A circuit, comprising a first battery group, a second battery group, a first switch, a second switch, a third switch, a fourth switch, and a first branch, wherein the first branch comprises a first resistor and a fifth switch that are connected in series;
a positive electrode of the first battery group is electrically connected to a positive electrode of the second battery group through the first switch and the second switch;
a negative electrode of the first battery group is electrically connected to a negative electrode of the second battery group through the third switch and the fourth switch; and
the first branch is connected in parallel to the first switch, the second switch, the third switch, or the fourth switch.

2. The circuit according to claim 1, wherein the circuit is configured to: when a voltage of the first battery group is not equal to a voltage of the second battery group, turn on the fifth switch, turn on a switch that is in the first switch, the second switch, the third switch, and the fourth switch and that is not connected in parallel to the first branch, and turn off a switch that is in the first switch, the second switch, the third switch, and the fourth switch and that is connected in parallel to the first branch.

3. The circuit according to claim 1, wherein the circuit is configured to: when a difference between a voltage of the first battery group and a voltage of the second battery group is greater than a first threshold, turn on the fifth switch, turn on a switch that is in the first switch, the second switch, the third switch, and the fourth switch and that is not connected in parallel to the first branch, and turn off a switch that is in the first switch, the second switch, the third switch, and the fourth switch and that is connected in parallel to the first branch.

4. The circuit according to any one of claims 1 to 3, wherein
the circuit further comprises a first interface and a sixth switch, the negative electrode of the first battery group is electrically connected to the positive electrode of the second battery group through the sixth switch, a first end of the first interface is connected between the first switch and the second switch, a second end of the first interface is connected between the third switch and the fourth switch, the first interface is configured to connect to a first apparatus, and the first apparatus comprises a first power supply apparatus or a first power-consuming apparatus.

5. The circuit according to claim 4, wherein the first apparatus comprises the first power supply apparatus, and the first power supply apparatus is configured to charge the first battery group and/or the second battery group; and
the circuit is configured to: turn on the first switch, the second switch, the third switch, and the fourth switch, and turn off the fifth switch and the sixth switch when a sum of the voltage of the first battery group and the voltage of the second battery group is less than twice a maximum output voltage of the first power supply apparatus.

6. The circuit according to claim 5, wherein the circuit is configured to: turn on the first switch, the fourth switch, and the sixth switch and turn off the second switch, the third switch, and the fifth switch when the sum of the voltage of the first battery group and the voltage of the second battery group is less than the maximum output voltage of the first power supply apparatus.

7. The circuit according to claim 5, wherein the turning on the first switch, the second switch, the third switch, and the fourth switch, and turning off the fifth switch and the sixth switch when a sum of the voltage of the first battery group and the voltage of the second battery group is less than twice a maximum output voltage of the first power supply apparatus further comprises:
when the difference between the voltage of the first battery group and the voltage of the second battery group is greater than a second threshold, turning on the fifth switch, turning on the switch that is in the first switch, the second switch, the third switch, and the fourth switch and that is not connected in parallel to the first branch, and turning off the sixth switch and the switch that is in the first switch, the second switch, the third switch, and the fourth switch and that is connected in parallel to the first branch; and/or
when the difference between the voltage of the first battery group and the voltage of the second battery group is less than or equal to the second threshold, turning on the first switch, the second switch, the third switch, and the fourth switch, and turning off the fifth switch and the sixth switch.

8. The circuit according to any one of claims 4 to 6, wherein the first apparatus comprises the first power supply apparatus, and the first power supply apparatus is configured to charge the first battery group and/or the second battery group; and
the circuit is configured to: turn on the first switch and the third switch and turn off the second switch and the fourth switch when the voltage of the first battery group is less than the voltage of the second battery group; and/or
the circuit is configured to: turn on the second switch and the fourth switch and turn off the first switch and the third switch when the voltage of the first battery group is greater than the voltage of the second battery group.

9. The circuit according to claim 4, wherein the first apparatus comprises the first power-consuming apparatus; and
the circuit is configured to: turn on the first switch, the second switch, the third switch, and the fourth switch and turn off the fifth switch and the sixth switch when a sum of the voltage of the first battery group and the voltage of the second battery group is less than or equal to twice a maximum input voltage of the first power-consuming apparatus.

10. The circuit according to claim 9, wherein the circuit is configured to: turn on the first switch, the fourth switch, and the sixth switch and turn off the second switch, the third switch, and the fifth switch when the sum of the voltage of the first battery group and the voltage of the second battery group is less than or equal to the maximum input voltage of the first power-consuming apparatus.

11. The circuit according to claim 9, wherein the turning on the first switch, the second switch, the third switch, and the fourth switch and turning off the fifth switch and the sixth switch when a sum of the voltage of the first battery group and the voltage of the second battery group is less than or equal to twice a maximum input voltage of the first power-consuming apparatus further comprises:
when the difference between the voltage of the first battery group and the voltage of the second battery group is greater than a third threshold, turning on the fifth switch, turning on the switch that is in the first switch, the second switch, the third switch, and the fourth switch and that is not connected in parallel to the first branch, and turning off the sixth switch and the switch that is in the first switch, the second switch, the third switch, and the fourth switch and that is connected in parallel to the first branch; and/or
when the difference between the voltage of the first battery group and the voltage of the second battery group is less than or equal to the third threshold, turning on the first switch, the second switch, the third switch, and the fourth switch, and turning off the fifth switch and the sixth switch.

12. The circuit according to any one of claims 9 to 11, wherein the first power-consuming apparatus comprises a capacitor, the circuit further comprises a second branch, the second branch comprises a second resistor and a seventh switch that are connected in series, and the second branch is connected in parallel to the first switch, the second switch, the third switch, the fourth switch, or the sixth switch.

13. The circuit according to claim 12, wherein the first resistor and the second resistor are shared resistors, and the fifth switch and the seventh switch are shared switches.

14. The circuit according to any one of claims 4 to 13, wherein the circuit further comprises a second interface and an eighth switch, a first end of the second interface is connected to the positive electrode of the first battery group through the eighth switch, a second end of the second interface is connected to the negative electrode of the second battery group through the fourth switch, the second interface is connected to a second apparatus, and the second apparatus comprises a second power supply apparatus or a second power-consuming apparatus.

15. The circuit according to claim 14, wherein the second apparatus comprises the second power supply apparatus; and
the circuit is configured to turn on the fourth switch, the sixth switch, and the eighth switch when the sum of the voltage of the first battery group and the voltage of the second battery group is less than a maximum output voltage of the second power supply apparatus.

16. The circuit according to claim 14, wherein the second apparatus comprises the second power-consuming apparatus; and
the circuit is configured to turn on the fourth switch, the sixth switch, and the eighth switch when the sum of the voltage of the first battery group and the voltage of the second battery group is less than or equal to an allowed maximum input voltage of the second power-consuming apparatus.

17. The circuit according to claim 16, wherein the second power-consuming apparatus comprises a capacitor, the circuit further comprises a third branch, the third branch comprises a third resistor and a ninth switch that are connected in series, and the third branch is connected in parallel to the fourth switch, the sixth switch, or the eighth switch.

18. The circuit according to claim 17, wherein the first resistor and the third resistor are shared resistors, and the fifth switch and the ninth switch are shared switches.

19. The circuit according to any one of claims 14 to 18, wherein the eighth switch is located between the first battery group and the first switch, and the first branch is connected in parallel to the first switch, the second switch, the third switch, the fourth switch, or the eighth switch.

20. A control method for a circuit, wherein the circuit comprises a first battery group, a second battery group, a first switch, a second switch, a third switch, a fourth switch, and a first branch, wherein the first branch comprises a first resistor and a fifth switch that are connected in series, a positive electrode of the first battery group is electrically connected to a positive electrode of the second battery group through the first switch and the second switch, a negative electrode of the first battery group is electrically connected to a negative electrode of the second battery group through the third switch and the fourth switch, and the first branch is connected in parallel to the first switch, the second switch, the third switch, or the fourth switch; and
the control method comprises:
obtaining a voltage of the first battery group and a voltage of the second battery group; and
controlling, based on a difference between the voltage of the first battery group and the voltage of the second battery group, a fifth switch in the first branch to be turned on or off.

21. The control method according to claim 20, wherein the controlling, based on a difference between the voltage of the first battery group and the voltage of the second battery group, a fifth switch in the first branch to be turned on or off comprises:
when the difference between the voltage of the first battery group and the voltage of the second battery group is greater than a first threshold, controlling the fifth switch to be turned on and a switch that is in the first switch, the second switch, the third switch, and the fourth switch and that is not connected in parallel to the first branch to be turned on, and controlling a switch that is in the first switch, the second switch, the third switch, and the fourth switch and that is connected in parallel to the first branch to be turned off.

22. The control method according to claim 20 or 21, wherein the circuit further comprises a first interface and a sixth switch, the negative electrode of the first battery group is electrically connected to the positive electrode of the second battery group through the sixth switch, a first end of the first interface is connected between the first switch and the second switch, a second end of the first interface is connected between the third switch and the fourth switch, the first interface is configured to connect to a first apparatus, and the first apparatus comprises a first power supply apparatus or a first power-consuming apparatus.

23. The control method according to claim 22, wherein the first apparatus comprises the first power supply apparatus; and the control method further comprises:
controlling the first switch, the second switch, the third switch, and the fourth switch to be turned on and controlling the fifth switch and the sixth switch to be turned off when a sum of the voltage of the first battery group and the voltage of the second battery group is less than twice a maximum output voltage of the first power supply apparatus.

24. The control method according to claim 23, wherein the control method further comprises:
controlling the first switch, the fourth switch, and the sixth switch to be turned on and controlling the second switch, the third switch, and the fifth switch to be turned off when the sum of the voltage of the first battery group and the voltage of the second battery group is less than the maximum output voltage of the first power supply apparatus.

25. The control method according to claim 23, wherein the controlling the first switch, the second switch, the third switch, and the fourth switch to be turned on and controlling the fifth switch and the sixth switch to be turned off when a sum of the voltage of the first battery group and the voltage of the second battery group is less than twice a maximum output voltage of the first power supply apparatus further comprises:
when the difference between the voltage of the first battery group and the voltage of the second battery group is greater than a second threshold, controlling the fifth switch to be turned on, and the switch that is in the first switch, the second switch, the third switch, and the fourth switch and that is not connected in parallel to the first branch to be turned on, and controlling the sixth switch and the switch that is in the first switch, the second switch, the third switch, and the fourth switch and that is connected in parallel to the first branch to be turned off; and/or
when the difference between the voltage of the first battery group and the voltage of the second battery group is less than or equal to the second threshold, controlling the first switch, the second switch, the third switch, and the fourth switch to be turned on, and controlling the fifth switch and the sixth switch to be turned off.

26. The control method according to any one of claims 22 to 24, wherein the first apparatus comprises the first power supply apparatus; and the control method further comprises:
controlling the first switch and the third switch to be turned on and controlling the second switch and the fourth switch to be turned off when the voltage of the first battery group is less than the voltage of the second battery group; and/or
controlling the second switch and the fourth switch to be turned on and controlling the first switch and the third switch to be turned off when the voltage of the first battery group is greater than the voltage of the second battery group.

27. The control method according to claim 22, wherein the first apparatus comprises the first power-consuming apparatus; and the control method further comprises:
controlling the first switch, the second switch, the third switch, and the fourth switch to be turned on and controlling the fifth switch and the sixth switch to be turned off when a sum of the voltage of the first battery group and the voltage of the second battery group is less than or equal to twice a maximum input voltage of the first power-consuming apparatus.

28. The control method according to claim 27, wherein the control method further comprises:
controlling the first switch, the fourth switch, and the sixth switch to be turned on and controlling the second switch, the third switch, and the fifth switch to be turned off when the sum of the voltage of the first battery group and the voltage of the second battery group is less than or equal to the maximum input voltage of the first power-consuming apparatus.

29. The circuit according to claim 27, wherein the controlling the first switch, the second switch, the third switch, and the fourth switch to be turned on and controlling the fifth switch and the sixth switch to be turned off when a sum of the voltage of the first battery group and the voltage of the second battery group is less than or equal to twice a maximum input voltage of the first power-consuming apparatus further comprises:
when the difference between the voltage of the first battery group and the voltage of the second battery group is greater than a third threshold, controlling the fifth switch to be turned on, and the switch that is in the first switch, the second switch, the third switch, and the fourth switch and that is not connected in parallel to the first branch to be turned on, and controlling the sixth switch and the switch that is in the first switch, the second switch, the third switch, and the fourth switch and that is connected in parallel to the first branch to be turned off; and/or
when the difference between the voltage of the first battery group and the voltage of the second battery group is less than or equal to the third threshold, controlling the first switch, the second switch, the third switch, and the fourth switch to be turned on, and controlling the fifth switch and the sixth switch to be turned off.

30. A control method for a circuit, wherein the circuit comprises a first battery group and a second battery group, the circuit is configured to be connected to a power supply apparatus, and is configured to charge the first battery group and/or the second battery group via the power supply apparatus, and a working mode of the circuit comprises a first mode and a second mode; and the control method comprises:
obtaining a voltage of the first battery group and a voltage of the second battery group; and
controlling the circuit to switch to the second mode when a sum of the voltage of the first battery group and the voltage of the second battery group is greater than or equal to a maximum output voltage of the power supply apparatus, wherein
in the first mode, the first battery group and the second battery group are connected in series; and in the second mode, the first battery group and the second battery group are connected in parallel.

31. The control method according to claim 30, wherein the method further comprises:
controlling the circuit to switch to the first mode when the sum of the voltage of the first battery group and the voltage of the second battery group is less than the maximum output voltage of the power supply apparatus.

32. The control method according to claim 30 or 31, wherein the working mode of the circuit further comprises a third mode, and the controlling the circuit to switch to the second mode when a sum of the voltage of the first battery group and the voltage of the second battery group is greater than or equal to a maximum output voltage of the power supply apparatus comprises:
obtaining a difference between the voltage of the first battery group and the voltage of the second battery group when the sum of the voltage of the first battery group and the voltage of the second battery group is greater than or equal to the maximum output voltage of the power supply apparatus; and
controlling the circuit to switch to the second mode when the difference between the voltage of the first battery group and the voltage of the second battery group is less than or equal to a first threshold; or
controlling the circuit to switch to the third mode when the difference between the voltage of the first battery group and the voltage of the second battery group is greater than the first threshold, wherein
in the third mode, the circuit is configured to charge the first battery group or charge the second battery group.

33. A control apparatus for a circuit, comprising a processing module, configured to perform the control method according to any one of claims 20 to 29, and/or configured to perform the control method according to any one of claims 30 to 32.

34. A control apparatus for a circuit, comprising at least one processor, wherein the at least one processor is configured to: be coupled to a memory, and read and execute instructions in the memory, to implement the control method according to any one of claims 20 to 29, and/or to implement the control method according to any one of claims 30 to 32.

35. A computer-readable storage medium, comprising instructions, wherein when the instructions are run on a computer, the computer is enabled to perform the control method according to any one of claims 20 to 29, and/or perform the control method according to any one of claims 30 to 32.

36. An electronic device, comprising the circuit according to any one of claims 1 to 19.

37. A vehicle, comprising the circuit according to any one of claims 1 to 19.
